# EUROPEAN PATENT APPLICATION

(11) **EP 4 525 315 A1**
(43) Date of publication of application: **19.03.2025**
(21) Application number: 23803568.7
(22) Date of filing: 10.05.2023
(51) Int. Cl.: H04B 1/03, H01Q 7/00, H01Q 9/44

(54) **VERTICAL RADIATION-TYPE RF TRANSMITTER**

(30) Priority: 10.05.2022 JP 2022077719
(71) Applicant: Aeterlink Corp., Tokyo 130-0013 (JP)
(72) Inventor: TANABE, Yuji, Tokyo 1000004 (JP)
(74) Representative: Slingsby Partners LLP
(86) International application number: PCT/JP2023/017520
(87) International publication number: WO 2023/219093

(57) **Abstract**

To provide a transmitter having characteristics more excellent than conventional ones. The transmitter includes: a housing; a main board arranged in the housing; a first antenna board having a first antenna part, arranged in the housing; and a reflecting part for reflecting electromagnetic waves outputted from the first antenna part.

## Description

### FIELD OF THE INVENTION

### [Relevant Applications]

This application claims priority to Japanese Patent Application No. 2022-77719 filed on May 10, 2022, entitled "VERTICAL-EMITTING RF TRANSMITTER", the content of which is incorporated herein by reference in the entirety.

The present invention relates to a vertical-emitting RF transmitter or radio frequency transmitter.

### BACKGROUND

In cases of wireless power supply devices, controlling directivity of antenna has often been a problem. A way of performing the control is not uniform, and for example, an omnidirectional antenna capable of transmitting signals in various directions, a directional antenna capable of transmitting signals most strongly in one direction, and the like have been used depending on modes of operation.

As a background art of the present technical field, WO 2020/084841 A1 (Patent Document 1) may be cited. The Patent Document 1 discloses an antenna module. "This antenna module is configured to be installed in a vehicle, and includes an array antenna for forming beams to be directed toward the outside of the vehicle from an opening provided on an outer wall of the vehicle, and a housing for holding the array antenna in the vehicle (see Abstract)."

### PRIOR ART DOCUMENTS

[Patent Document 1] WO 2020/084841

### SUMMARY OF THE INVENTION

### [Problem to be solved by the invention]

A simple structure configured to be used in a small transmitter is not discussed in the Patent Document 1.

Therefore, the present invention provides a small transmitter having a simple structure.

### [Means for solving the problem]

In order to solve the above-mentioned problems, for example, the configurations described in the claims can be adopted.

Although the present application includes a plurality of means for solving the above-mentioned problems, for example, according to an embodiment, the below-mentioned transmitter is provided. The transmitter is characterized by including: a housing; a main board arranged in the housing; a first antenna board having a first antenna part, arranged in the housing; and a reflecting part for reflecting electromagnetic waves outputted from the first antenna part.

### [Effects of the Invention]

According to the present invention, a small transmitter having a simple structure is thus provided.

Problems, configurations, and effects other than those described above will be apparent from the following descriptions of embodiments.

### BRIEF DESCRIPTION OF THE DRAWINGS

FIG. 1 is an example of an explanatory diagram illustrating a transmitter 1 and the like connected to a network 5.
FIG. 2 is an example of a block diagram illustrating an electrical configuration of the transmitter 1 and the electronic device 2.
FIG. 3 is an example of six views drawn by an orthographic drawing method of the transmitter 1 according to the first embodiment.
FIG. 4 is an example of an explanatory diagram illustrating components of the transmitter 1.
FIG. 5 depicts an example giving an explanation of the housing 400 to which the first antenna board 20 is attached.
FIG. 6 depicts an example giving an explanation of the holding part 600.
FIG. 7 depicts an example giving an explanation of the main board 10.
FIG. 8 depicts an example giving an explanation of the housing 400 in which the holding part 600, the first antenna board 20, and the like are accommodated.
FIG. 9 depicts an example giving an explanation of the spatial positional relationship of the main board 10, the first antenna board 20, and the second antenna board 30 which are accommodated in the housing 400 of FIG. 8.
FIG. 10 depicts an example giving an explanation of the configuration of the reflecting part 300.
FIG. 11 depicts an example giving an explanation of the reflecting part 300 on which the main board 10 is stacked.
FIG. 12 depicts an example giving an explanation of the transmitter 1 according to the second embodiment.
FIG. 13 depicts an example giving an explanation of a plurality of different configuration examples of the transmitter 1.
FIG. 14 depicts an example giving an explanation of the emitting direction of electromagnetic waves.
FIG. 15 depicts an example giving an explanation of the emitting direction of electromagnetic waves in the transmitter 1 of FIG. 12.
FIG. 16 depicts an example giving an explanation of the performances of the transmitter 1 according to the second embodiment illustrated in FIG. 12.
FIG. 17 depicts an example giving an explanation of another configuration of the transmitter 1.
FIG. 18 depicts an example giving an explanation of the performances of the transmitter 1 illustrated in FIG. 17.
FIG. 19 depicts an example giving an explanation of another configuration example of the transmitter 1.
FIG. 20 depicts an example giving an explanation of the performances of the transmitter 1 illustrated in FIG. 19.
FIG. 21 depicts an example giving an explanation of another configuration of the transmitter 1.
FIG. 22 depicts an example giving an explanation of the performances of the transmitter 1 illustrated in FIG. 21.
FIG. 23 depicts an example giving an explanation of the emitting direction of electromagnetic waves in the transmitter 1 illustrated in FIG. 21.
FIG. 24 depicts an example giving an explanation of the comparison when various antennas are used.

### DESCRIPTION OF THE PREFERRED EMBODIMENTS

Hereinafter, embodiments will be described in detail with referring to the figures.

### FIRST EMBODIMENT

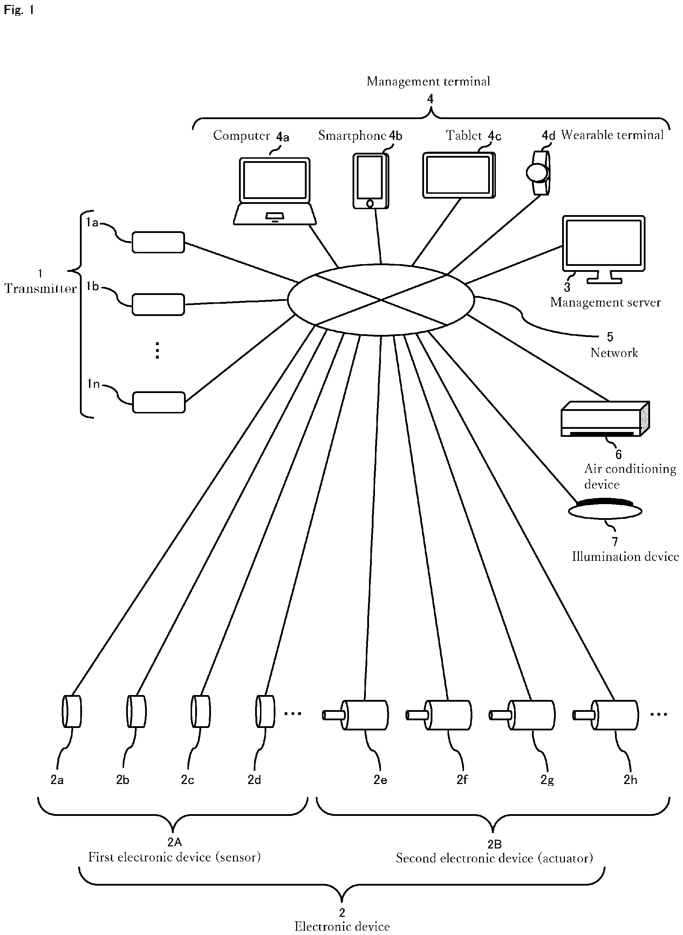

FIG. 1 is an example of an explanatory diagram illustrating a transmitter (here, the term "transmitter" is interchangeable with other similar variations such as "transmitting device") 1 and the like connected to a network 5.

The transmitter 1 (1a, 1b, ···, 1n) is configured to be arranged in a closed space, and in particular, it is configured to perform wireless power supply (here, the term "wireless power supply" is interchangeable with other similar variations such as "wireless power feeding").

One or a plurality of the transmitters 1 (1a, 1b, ···, 1n) may be located, for example, in a factory or plant, an office, etc.

One or a plurality of the transmitters 1 (1a, 1b, ···, 1n) emit electromagnetic waves (here, the term "emit" is interchangeable with other similar variations such as "radiate" and "output") so as to be wirelessly received by one or a plurality of electronic devices 2 in a closed space in which the transmitter(s) 1 and the electronic device(s) 2 are located. The transmitter(s) 1 (1a, 1b, ···, 1n) and the electronic device(s) 2 (2A, 2B) are arranged mutually relatively in order to supply electric power (hereinbelow, the term "electric power" is abbreviated as "power") as if there is an electric outlet between them in an air.

One or a plurality of the electronic devices 2 (2A, 2B) are intended to be arranged in a factory, an office, or the like, and particularly, it is configured to be capable of receiving power by wireless power supply.

The electronic device 2 may be positioned, fixed in a space in which the transmitter 1 is mounted. However, it may be provided so as to be moved in a space, for example, together with a user or a moving body, or together with a larger-scale device to which the electronic device 2 is attached.

The first electronic device 2A is, for example, one or a plurality of sensors 2a, 2b, 2c, 2d, ···.

One or a plurality of the sensors 2a, 2b, 2c, 2d may include, for example, a light sensor, a temperature sensor, an audio sensor (for example, a microphone), an optical sensor (for example, a camera, a visible light sensor, an invisible light sensor, and the like), a proximity sensor, a touch sensor, a force sensor, a vibration sensor, a directional sensor, a motion sensor (for example, an accelerometer or a velocity sensor), a thermal sensor, a resistive sensor, a magnetic sensor, a millimeter-wave sensor, a CO₂ sensor, and the like.

The second electronic device 2B is, for example, one or a plurality of actuators 2e, 2f, 2g, 2h, ···.

One or a plurality of the actuators 2e, 2f, 2g, 2h may include, for example, electromagnetic drives used to perform operations such as rotating, pivoting, translating, reciprocating, up-and-down moving, opening/closing, pressing, and the like.

One or a plurality of the electronic devices 2 (2A, 2B) are connected to a management server 3, a management terminal 4, an air conditioning device 6, an illumination device 7, or the like via the network 5, for example, so as to be capable of performing data communication, and in particular, of performing mutual data communication.

With such a configuration, one or a plurality of the electronic devices 2 (2A, 2B) are capable of wirelessly receiving power from the transmitter 1.

In addition, one or a plurality of the electronic devices 2 (2A, 2B) are capable of transmitting detected data to the management server 3, the management terminal 4, or the like, for example, to a PLC (or Programmable Logic Controller) or the like provided in these devices, or of causing to function the air conditioner 6 or the illumination device 7, based on particular detection data, for example, information on presence or absence of a person, a body temperature of a person, or the like.

The electronic device 2 may be positioned, fixed in a space in which the transmitter 1 is mounted, but may be configured to be movable in the space together with a relatively large-scaled device to which the actuator is attached.

Examples of a relatively large-scaled device to which the actuator is attached include an articulated robot.

The transmitter 1 may preferably be configured to be capable of wirelessly supplying power to a device that consumes power, and for example, the device may be an actuator mounted in an articulated robot.

One or a plurality of the transmitters 1 are used to wirelessly supply power to any one or more of the electronic devices 2 such as various types of sensors 2a, 2 b, 2c, 2d, ··· and actuators 2e, 2f, 2g, 2h, ··· which are used in fields of FA (or factory automation), IoT (or Internet of Things), and home electric appliances, etc. The transmitter 1 is capable of making a power supply line of the electronic device(s) 2 wireless, so that it is possible to greatly reduce problems such as a burden on a wire, a disconnection of a wire, and a maintenance of a wire compared to a case when supplying power is performed with a wired power supply line.

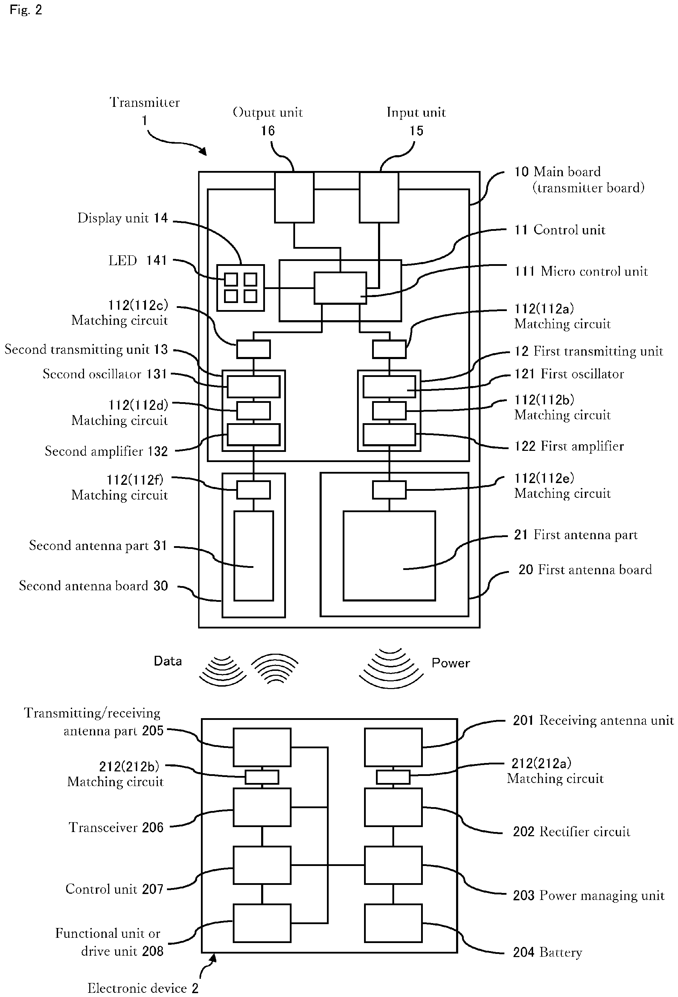

FIG. 2 is an example of a block diagram illustrating an electrical configuration of the transmitter 1 and the electronic device 2.

The transmitter 1 is configured to supply power to the electronic device 2.

The transmitter 1 is further configured to be capable of performing mutual data communication with the electronic device 2.

The transmitter 1 includes, for example, a main board (here, the term "board" is interchangeable with other similar variations such as "substrate") 10, a first antenna board 20, and a second antenna board 30.

The main board 10 includes, for example, a control unit 11, a first transmitting unit 12, a second transmitting unit 13, a display unit 14, an input unit 15, and an output unit 16.

The control unit 11 includes, for example, a micro control unit 111 or the like that controls a transmitting function and the like of the transmitter 1.

The first transmitting unit 12 includes, for example, a first oscillator 121, a first amplifier 122, and the like.

The second transmitting unit 13 includes, for example, a second oscillator 131, a second amplifier 132 and the like.

The control unit 11 generates electromagnetic waves for performing wireless power supply, by using the first transmitting unit 12, and also generates electromagnetic waves for performing data communication, by using the second transmitting unit 13.

The display unit 14 is configured to display using, for example, an LED or the like, and in the example of FIG. 2, the display unit 14 includes four LEDs.

The control unit 11 is capable of controlling the lighting state, the blinking state, the color, and the like of the respective LEDs according to the functional state, the operating state, and the like of the transmitter 1.

By controlling the lighting state, the blinking state, the color, and the like of the LED, for example, it becomes possible to output, to the user, information on presence or absence of a power source, information on that the power source is being activated/initialized, information on that the normal operation is being performed, information on that RF output is switched on, information on that there is an error on the power source (for example, the power source is 15V or less), and the like.

The input unit 15 is capable of being used to input electric power and data to the transmitter 1.

The output unit 16 is capable of being used to output electric power and data from the transmitter 1.

For example, the transmitter 1a may be configured to be connected in series to another transmitter 1b, tied in a row, via a cable or the like.

In the configuration in which the transmitter 1a and the transmitter 1b are connected in series, the output unit of the transmitter 1a and the input unit of the transmitter 1b may be connected through a cable, but the reverse connection may be constituted likewise.

With such a configuration, there is no need to provide a separate power supply cable or communication cable for the respective transmitters (1a, 1b, ···, 1n) so that it is possible to arrange a plurality of transmitters 1 in a space at a lower cost.

The first antenna board 20 includes, for example, a first antenna part (or first antenna unit) 21.

The first antenna part 21 emits electromagnetic waves for performing wireless power supply to the outside, based on signals received from the first transmitting unit 12, in particular, signals oscillated at a predetermined frequency.

The first antenna part 21 is capable of transmitting energy to an arbitrary object such as a robot, a device, a PC, or the like, in addition to supplying energy received via the input unit 15 to the electronic device 2.

Further, the target of the power transmission may be other electronic device such as a mobile phone, a PDA (or Personal Digital Assistant), a wireless microphone, a wireless USB, a wireless theater, a wireless TV, a wireless camera, a wireless headphone, a wireless mouse, a wireless keyboard, a wireless router, a wireless printer, or the like.

The second antenna board 30 includes, for example, a second antenna part (or second antenna unit) 31.

The second antenna part 31 may be configured to emit electromagnetic waves for performing data communication to the outside, or to receive electromagnetic waves for performing data communication emitted from the electronic device 2, based on signals received from the second transmitting unit 13, in particular, signals oscillated at a predetermined frequency.

The second antenna board 30 may be disposed substantially perpendicularly to the first antenna board 20 and the main board 10.

With such a configuration, it is possible to realize a compact transmitter 1 so as to effective use of a space.

The transmitter 1 further includes a plurality of matching circuits 112 (112a, 112b, 112c, 112d, 112e, 112f).

Based on the matching using the respective matching circuits 112 (112a, 112b, 112c, 112d, 112e, 112f) which are provided at the respective positions in the transmitter 1 as illustrated in FIG. 2, it is possible to realize the transmitter 1 having a structure of a lower attitude (here, the term "attitude" is interchangeable with other similar variations such as "profile" and "posture") while maintaining a relatively high antenna efficiency in the configuration illustrated in FIG. 2.

The electronic device 2 includes, for example, a receiving antenna unit 201, a rectifier circuit 202, a power managing unit 203, a battery 204, a transmitting/receiving antenna unit 205, a transceiver 206, a control unit 207, a functional unit or drive unit 208, and the like.

The receiving antenna unit 201 receives, for example, microwaves for power supply that are transmitted from the first antenna part 21 toward the outside. For example, the receiving antenna unit 201 may preferably function as a power receiving antenna in 920 MHz band, for example, at 918 MHz.

The rectifier circuit 202 (for example, a part of a PCB or FPC) is configured to rectify received radio waves to convert them to rectified voltages.

The power managing unit 203 (for example, a part of a PCB or FPC) is configured to control charge voltages based on the rectified voltages.

The battery 204 may be implemented, for example, in a part of a PCB or FPC.

The battery 204 is configured to be charged by charging voltages transmitted from the power managing unit 203.

The battery 204 is capable of transmitting received power to the control unit 207, the functional unit or drive unit 208, and the like via the power managing unit 203.

Accordingly, the electronic device 2 is capable of functioning or being driven by wireless power supply from the transmitter 1.

The control unit 207 is configured to continuously or intermittently monitor, for example, the states of the power managing unit 203, the states of the functional unit or drive unit 208, and/or information acquired by a sensor in the configuration in which the functional unit or drive unit 208 is a sensor.

The transceiver 206 is configured to transmit the states of the power managing unit 203, the states of the functional unit or drive unit 208, and/or the information acquired by the functional unit or drive unit 208 such as a sensor, etc., to the external transmitter 1 via the transmitting/receiving antenna unit 205.

The transmitting/receiving antenna unit 205 may be configured as, for example, an inverted-F antenna. The transmitting/receiving antenna unit 205 configuration as an inverted-F antenna functions as, for example, a data communication antenna in 2.4 GHz band.

As described above, the power (or microwaves) for the wireless power supply (for example at 920 MHz or the like) is transmitted in one direction, but the radio waves for the data communication (for example, at 2.4 GHz, or the like) may be transmitted in both directions.

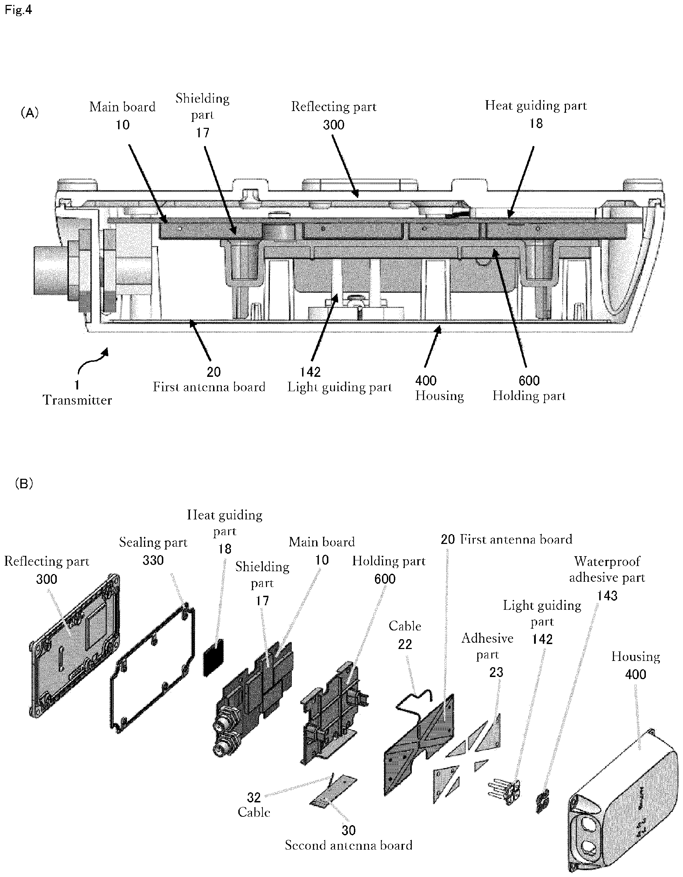

In particular, the transmitter 1 may preferably accommodate the main board 10, the first antenna board 20, and the second antenna board 30 in its housing 400 (for example, please refer to FIG. 4).

The opening part of the housing 400 may be closed by a reflecting part (or reflector).

In the configuration in which the reflecting part closes the opening part of the housing 400, it is possible to design the overall size of the transmitter 1 compact, in particular, the size of the transmitter 1 in the emitting direction (or the thickness of the transmitter 1) compact, and to increase the directivity of the first antenna part 21 that emits electromagnetic waves, in particular electromagnetic waves for power transmission.

The electronic device 2 further includes a plurality of matching circuits 212 (212a, 212b).

In the configuration illustrated in FIG. 2, it is possible to realize a smaller electronic device 2 while maintaining a high antenna efficiency, based on the matching using the respective matching circuits 212 (212a, 212b) which are provided at the respective locations in the electronic device 2 as illustrated in FIG. 2.

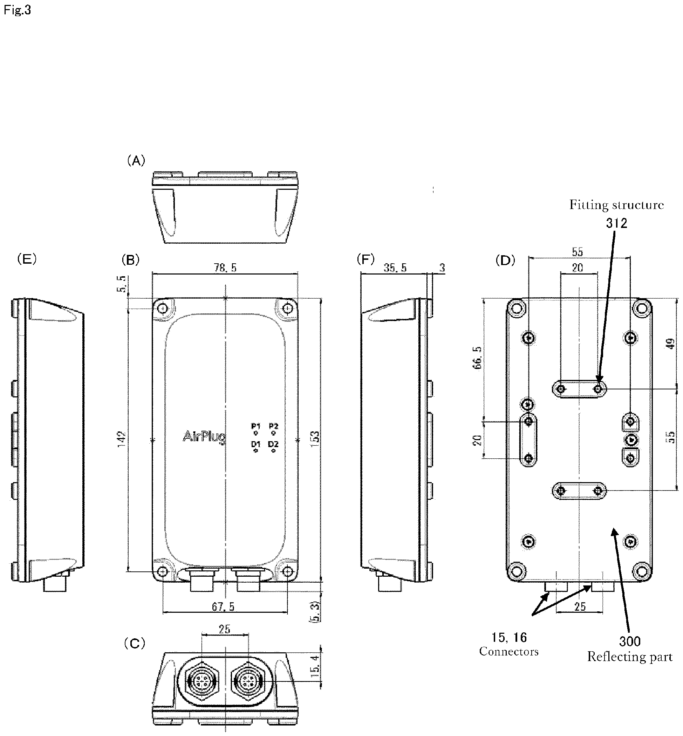

FIG. 3 is an example of six views drawn by an orthographic drawing method (that is, a front view, a right side view, a left side view, a top view, a bottom view and a back view) of the transmitter 1 according to the first embodiment.

In FIG. 3, the specific dimensions of the transmitter 1 are exemplified by numerical values, in units of "mm".

FIG. 3 (A) is an example of a view of the transmitter 1 according to the first embodiment as viewed from the above.

FIG. 3 (B) is an example of a view of the transmitter 1 according to the first embodiment as viewed from the front.

FIG. 3 (C) is an example of a view of the transmitter 1 according to the first embodiment as viewed from the below.

FIG. 3 (D) is an example of a view of the transmitter 1 according to the first embodiment as viewed from the back.

FIG. 3 (E) is an example of a view of the transmitter 1 according to the first embodiment as viewed from the right side.

FIG. 3 (F) is an example of a view of the transmitter 1 according to the first embodiment as viewed from the left side.

The dimensions and the like of the respective parts of the transmitter 1 according to the first embodiment specifically illustrated in FIG. 3 are only examples of the dimensions which are adaptable to the transmitter.

Therefore, the dimensions of the transmitter 1 according to the first embodiment specifically illustrated in FIG. 3 are not intended to limit or restrict the possible dimensions of the transmitter 1.

In particular, as illustrated in FIG. 3 (F), the dimension along the thickness direction, in other words, the dimension in the vertical direction or the dimension in the attitude direction of the transmitter 1 is given as 35.5 mm. However, this value may be made to be a smaller value so as to manufacture the transmitter 1 having a lower attitude.

It can be seen from FIG. 3 that the respective parts of the transmitter 1 are designed symmetrically. However, the respective parts of the transmitter 1 may be arranged asymmetrically.

In addition, the entire transmitter 1 may be formed to have an asymmetrical shape.

In FIG. 3 (D), connectors 15, 16 and a fitting structure 312 are illustrated.

The connectors 15, 16 are shown as one example of the input unit 15 and the output unit 16.

The fitting structure 312 is capable of being used as a connection unit for attaching the transmitter 1 to an attachment position, as a fitting.

FIG. 4 is an example of an explanatory diagram illustrating components (or configuration elements) of the transmitter 1.

FIG. 4 (A) is a cross-sectional view of the transmitter 1 according to the first embodiment.

FIG. 4 (B) is an exploded view of the transmitter 1 according to the first embodiment.

It can be seen from FIG. 4 that a plurality of components of the transmitter 1 are accommodated in the housing 400.

The accommodating space of the housing 400 in which a plurality of components of the transmitter 1 are accommodated is configured to be closed by the reflecting part 300 in a manner to cover these components with a lid.

In such a configuration, the reflecting part 300 also serves as a lid part for enclosing the accommodating space of the housing 400 so that it is possible to more compactly design the transmitter 1, and particularly, it is possible to reduce the dimension of the transmitter 1 in the attitude direction.

The reflecting part 300 has a reflectance that is higher than that of the housing 400 with respect to the electromagnetic waves emitted from the transmitter 1.

The reflecting part 300 is for reflecting electromagnetic waves emitted from the first antenna part 21 toward the housing 400.

The electromagnetic waves emitted from the first antenna part 21, and the electromagnetic waves emitted from the first antenna part 21 and reflected by the reflecting part 300 overlap and emitted to travel in a direction from the first antenna part 21 toward the housing 400.

In the configuration of FIG. 4 (A), the housing 400 accommodates and fixes the first antenna board 20 and the main board 10. The reflecting part 300 closes an opening part of the housing 400 accommodating the first antenna board 20 and the main board 10.

The housing 400 has a housing surface(s) substantially parallel (here, the term "substantially parallel " is interchangeable with other similar variations such as "nearly parallel" and "almost parallel") with the first antenna board 20 having the first antenna part 21, and with the reflecting part 300,

The distance from the first antenna board 20 (or the first antenna part 21) toward the housing surface is smaller than the distance from the first antenna board 20 toward the reflecting part 300 (or the reflecting plate 300), in particular, to the reflecting surface of the reflecting part 300.

In the constitution of FIG.4, it is possible to realize a compact and low-attitude structure while maintaining the high antenna efficiency, and in this constitution, the distance between the first antenna part 21 (or the first antenna board 20) and the reflecting part 300 is designed to be approximately λ /13, with respect to a wavelength λ of electromagnetic waves (here, the symbol λ represents a length of electromagnetic waves or radio waves).

Particularly preferably, the distance (or interval) from the first antenna part 21 to the reflecting part 300 is made to be about 25 mm.

Besides, it is possible to make the distance from the first antenna part 21 to the reflecting part 300 be in a range of from λ /16 to λ /4. When the distance between the first antenna part 21 and the reflecting part 300 is made to be approximately λ /16, it is possible to maintain the antenna efficiency of 90% or more. When it is desired to obtain a structure having a lower attitude, the distance of approximately λ /16 is optimum. However, in the configuration of FIG. 4, the distance of λ /13 is selected in consideration of the heights of the input unit 15 and the output unit 16, which are corresponding to the power supply/communication connectors.

In another configuration, it is possible to maximize the antenna efficiency on the conditions that the distance between the first antenna part 21 and the reflecting part 300 is made to be approximately λ /4 and that the phase of radio waves from the first antenna part 21 and the phase of radio waves reflected from the reflecting part 300 are in-phase.

In the example of FIG. 4, the housing 400 accommodates: the main board 10 having one or a plurality of shielding parts 17 and a heat guiding part 18; the first antenna board 20 connected to the main board 10 through a cable 22; the second antenna board 30 connected to the main board 10 through a cable 32; a holding part 600 for holding the first antenna board 20 on an inner surface of the housing 400 and the like, in the accommodating space.

At least a part of the first antenna board 20 is in contact with the housing surface.

For example, the first antenna board 20 is in contact with the inner surface of the housing 400 via an adhesive part (or connecting part) 23.

The light guiding part 142 illustrated in FIG.4 (B) is provided to guide a light from the LED 141 of the display unit 14 provided on the main board 10 toward the outside of the housing 400.

The light guiding part 142 is in contact with the opening part provided in the housing 400 via the waterproof adhesive part 143 in a fluid-tight manner.

The reflecting part 300 closes the opening part provided on the rear surface side of the housing 400 having the accommodating space via the sealing part 330 in a fluid-tight manner.

The main board 10 is made of a material having both of flame retardancy and low conductivity, for example, FR-4 (or Flame Retardant Type 4) having a thickness of 1.2 t (or 1.2 mm).

The shielding parts 17 are made of a metallic plate material, for example, galvanized steel (or SECC).

The shielding parts 17 are configured to be able to reduce the occurrence of spurious signals or unwanted radiations from a power amplifier or the like which is a signal generator.

The heat guiding part 18 is made of a thermally conductive material, for example, silicone

The first antenna board 20 and the second antenna board 30 are made of a material having both of flame retardancy and low conductivity, for example, FR-4 having a thickness of 0.6 t (or 0.6 mm).

The light guiding part 142 is made of a transparent synthetic resin, for example, acryl resin (or PMMA).

The reflecting part 300 is made of an aluminum-alloy, for example, ADC12.

The housing 400 is made of a synthetic resin, for example, polybutylene terephthalate (or PBT).

The holding part 600 is made of a synthetic resin, for example, polycarbonate (or PC) resin and ABS resin.

With such a configuration as illustrated in FIG. 4, the transmitter 1 is capable of emitting electromagnetic waves with higher radiation efficiency (or emission efficiency), in comparison with the related art, for example, with respect to the wireless power supply space, in spite of the low attitude configuration.

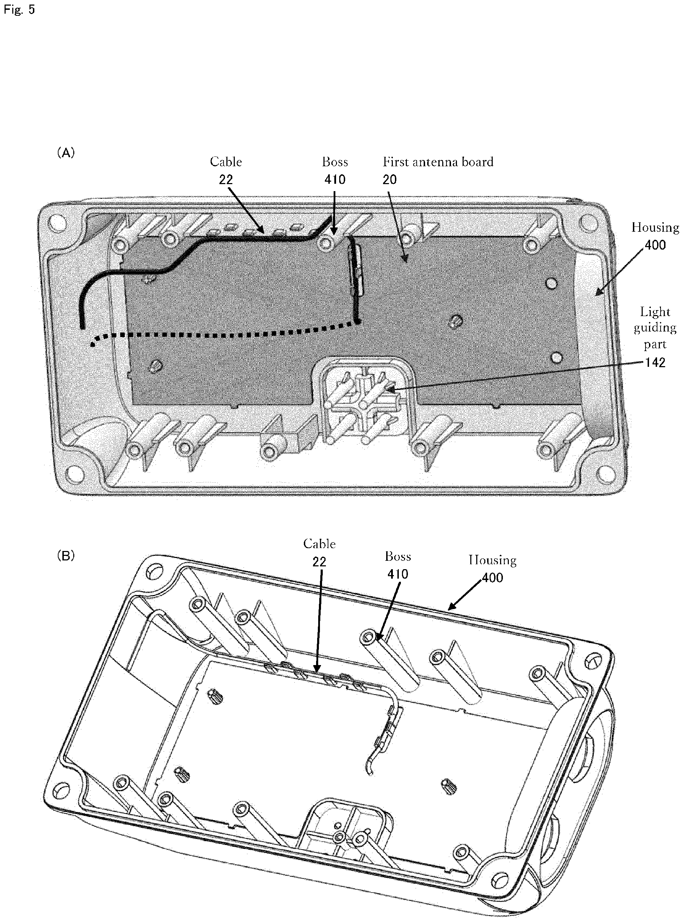

FIG. 5 depicts an example giving an explanation of the housing 400 to which the first antenna board 20 is attached.

FIG. 5 (A) depicts an example giving an explanation of one embodiment of the housing 400 to which the first antenna board 20 is attached.

FIG. 5 (B) depicts an example giving an explanation of an embodiment in which a cable 22 is guided in a different path, in comparison with the case of FIG. 5 (A).

In the embodiment of FIG. 5(A), the cable 22 is made to extend along the boss 410 in the attitude direction of the transmitter 1, but in the embodiment of FIG. 5(B), the cable 22 is made to extend along the long side of the first antenna board 20.

Besides, in the embodiment of FIG. 5 (A), the housing 400 is formed to have ten pieces of bosses, and in FIG. 5 (A), only one of them is attached with a reference numeral.

The shapes and lengths of the respective bosses may vary depending on the design.

For example, the first antenna board 20 is connected to the main board 10 via the first cable 22. The first antenna board 20 has a substantially rectangular shape, and the first cable 22 is guided from the long side of the substantially rectangular shape to the first antenna board 20, and is connected to the first antenna part 21.

In either case of the embodiments of FIG. 5 (A) and FIG. 5 (B), the cable 22 is guided from the long side of the first antenna board 20, in particular from the vicinity of the center of the long side of the first antenna board 20, toward the vicinity of the center of the first antenna board 20.

With such a configuration, it is possible to improve the performances of the transmitter 1 in comparison with the configuration in which the cable 22 is guided from the short side of the first antenna board 20, in particular from the vicinity of the center of the short side of the first antenna board 20, toward the vicinity of the center of the first antenna board 20, along a path as illustrated by a broken line in FIG. 5 (A).

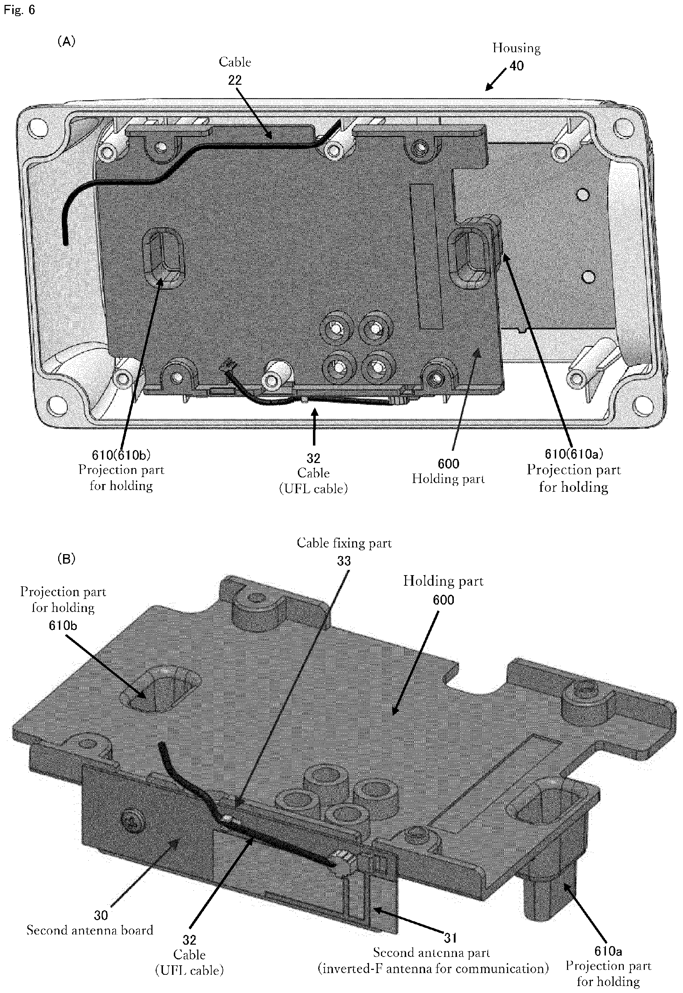

FIG. 6 depicts an example giving an explanation of the holding part 600.

FIG.6 (A) depicts an example giving an explanation of the housing 4 in which the first antenna board 20 and the holding part 600 are accommodated.

FIG.6 (B) depicts an example giving an explanation of the holding part 600 to which the second antenna board 30 is attached.

The second antenna board 30 may be fixed to the holding part 600 by fastening, for example, with a screw, or by hooking, for example, with a latch.

The holding part 600 is fixed to the housing 400 by screw or the like.

The holding part 600 which is fixed to the housing 400 is configured to push the first antenna board 20 to the inner surface of the housing 400 through at least one projection part for holding 610 (610a, 610b).

With such a configuration, even if an adhesion (or bonding member) 23 is used between the first antenna board 20 and the inner surface of the housing 400 and the adhesion between them is weakened, the stable attachment state of the first antenna board 20 to the housing 400 may be easily maintained, and thus it is preferable.

The holding part 600 holds the second antenna board 30 almost vertically with respect to the first antenna board 20.

Specifically, the holding part 600 is configured to be able to hold the second antenna board 30 such that the surface normal of the first antenna board 20 and the surface normal of the second antenna board 30 are substantially orthogonal.

The cable fixing part 33 of the second antenna board 30 or the cable fixing part 33 protruding through a through hole provided in the second antenna board 30 is configured as a clip capable of fixing the cable 21 connected to the second antenna part 31, for example, a coaxial cable, by shaping it.

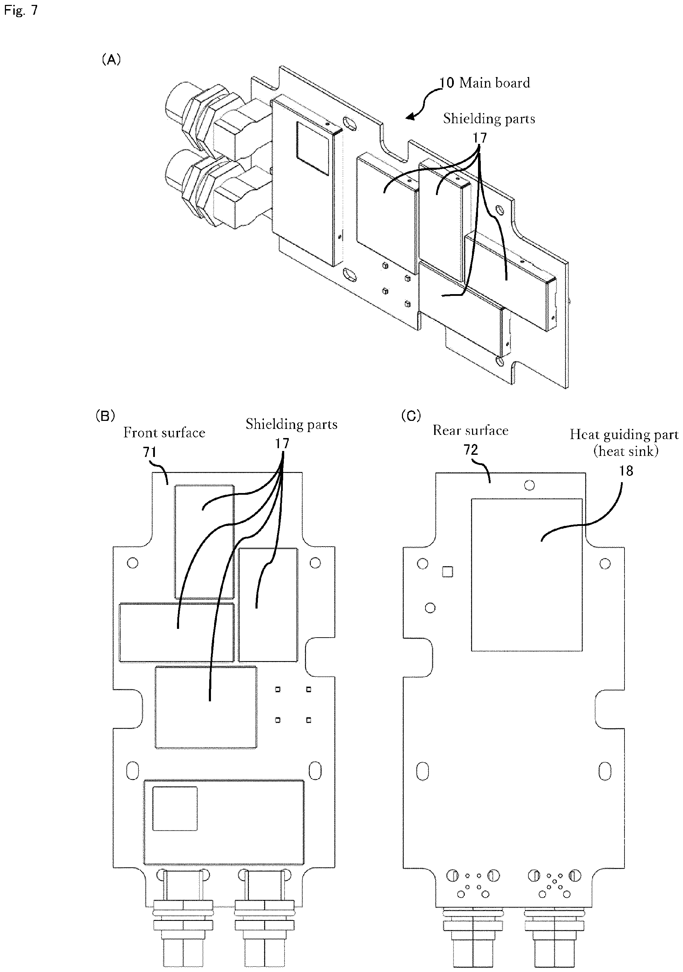

FIG. 7 depicts an example giving an explanation of the main board 10.

FIG. 7 (A) is a front view of the front surface 71 of the main board 10.

FIG. 7 (B) is a front view of the rear surface (or back surface) 72 of the main board 10.

The front surface 71 of the main board 10 is a surface facing the first antenna board 20 in the transmitter 1.

The main board 10 includes the shielding parts 17 and the like on the front surface 71.

As described above, the shielding parts 17 covers a signal generating unit such as a power amplifier so that it is possible to prevent spurious signals and/or unwanted radiations from coming out of the shielding parts 17.

In the embodiment of FIG. 7, a plurality of the shielding parts 17 are provided on the front surface 71, but in another embodiment, it is possible to provide a single, larger shielding part.

In yet another embodiment, instead of the configuration in which the shielding parts 17 are fixed to the main board 10, it is possible to sandwich and fix another shielding part between the main board 10 and the holding part 600.

For example, each of the shielding parts 17 is a metal cover (here, the term "cover" is interchangeable with other similar variations such as "case").

The shielding parts 17 may preferably have a configuration in which noise or the like generated from a signal-generating unit such as a power amplifier (PA) or an RF transmitting unit is effectively prevented from coming out of the shielding parts 17.

The rear surface 72 of the main board 10 is a surface facing the reflecting part 300 in the transmitter 1.

The main board 10 has the heat guiding part 18 on the rear surface 72, and the heat guiding part 18 is configured as a heat sink in the embodiment of FIG. 7.

Instead of or in addition to the heat sink, a heat conducting sheet or a heat conducting fluid (such as grease) may be used as the heat conducting part 18.

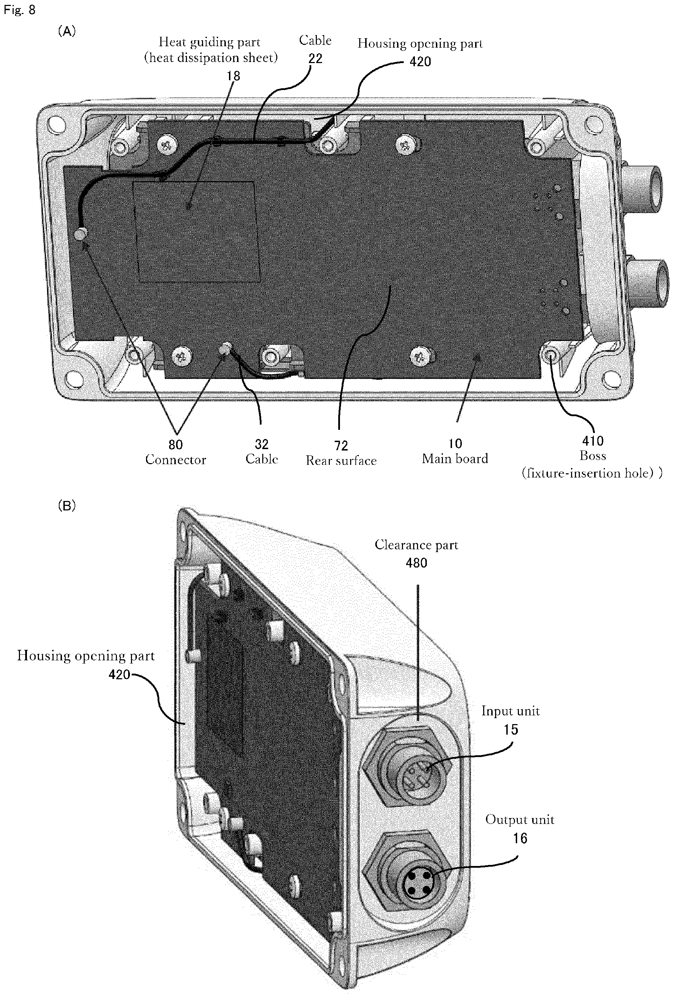

FIG. 8 depicts an example giving an explanation of the housing 400 in which the holding part 600, the first antenna board 20, and the like are accommodated.

FIG.8 (A) depicts an example giving an explanation of a state of the housing 400 in which the holding part 600, the first antenna board 20, and the like are accommodated, viewed from the side of the housing opening part 420.

FIG.8 (B) depicts an example giving an explanation of a state of the housing 400 of FIG. 8 (A), viewed from the side of the clearance part 480.

The housing 400 has the housing opening part 420, and the first antenna board 20, the holding part 600, and the like may preferably be brought in the housing through the housing opening part 420 to be accommodated therein.

In the embodiment of FIG. 8 (A), the main board 1 which is provided near the housing opening part 420 includes the heat guiding part 18 formed as a heat dissipation sheet, the connector 80 and the like, on the rear surface 72.

The main board 10 is connected to the cables 22 and 32 which are guided from the first antenna board 20 and the second antenna board 30 through the connector 80.

For example, the cables 22 and 32 may be configured as coaxial cables.

As illustrated in FIG.8 (B), the housing 400 has the clearance part 480, and the nuts of the input unit 15 and of the output unit 16 are tightened against the housing 400 in the clearance part 480.

The dimensions of the clearance part 480 may be determined to facilitate the attaching of a cable, for example, a M12D cable, which is connected to the input unit 15 or the output unit 16, and to stably hold the attachment state.

The dimensions of the clearance part 480 may preferably be determined to have values that are derived based on the dimensions illustrated in FIG. 3, for example.

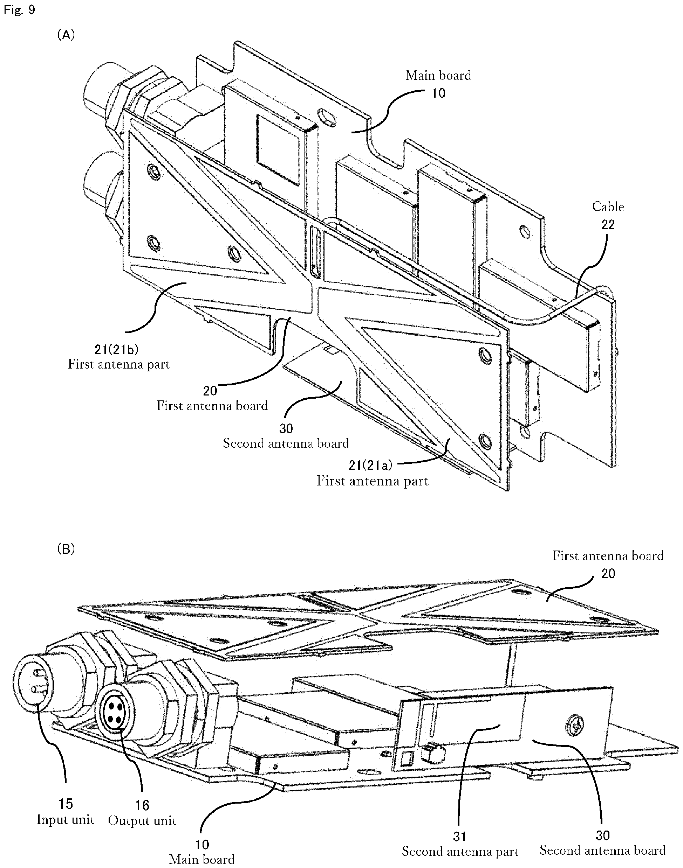

FIG. 9 depicts an example giving an explanation of the spatial positional relationship of the main board 10, the first antenna board 20, and the second antenna board 30 which are accommodated in the housing 400 of FIG. 8.

FIG. 9 (A) is an example of a perspective view illustrating a spatial positional relationship of the respective boards 10, 20, and 30.

FIG. 9 (B) is an example of a perspective view of the respective boards 10, 20, and 30 illustrated in FIG. 9 (A), as viewed from a different angle.

As illustrated in FIG. 9, the main board 10 and the first antenna board 20 are arranged substantially parallel to each other.

On the other hand, the second antenna board 30 is arranged so as to be substantially orthogonal to the main board 10 and to the first antenna board 20.

Accordingly, the respective boards 10, 20, and 30 are arranged such that the surface normal of the main board 10 and of the first antenna board 20 and the surface normal of the second antenna board 30 are substantially orthogonal to each other.

The spatial positional relationship of the main board 10, the first antenna board 20 and the like illustrated in FIG. 9 may preferably be stably held by the holding part 600, in the transmitter 1.

The holding part 600 may preferably maintain the interval between the main board 10 and the first antenna board 20, for example, by a distance in a range of from about 15 mm to about 30 mm.

With such a configuration, it is possible to achieve the high radiation efficiency while maintaining the low attitude design of the transmitter 1, for example, to be used in 920 MHz band.

As described above, the housing 400 has a housing surface(s) substantially parallel with the first antenna board 20 having the first antenna part 21, and with the reflecting part 300,

The housing surface(s) has a substantially rectangular shape.

The first antenna board 20 has, as the first antenna part 21, a first antenna element 21a and a second antenna element 21b, each of which has a substantially V shape. Ends of each of the first antenna element 21a and the second antenna element 21b face different apexes of the substantially rectangular shape of the housing surface.

In particular, ends of each of the first antenna element 21a and the second antenna element 21b face apexes of different short sides of the substantially rectangular shape of the housing surface.

For example, two pieces of the first antenna parts 21 (21a, 21b) are provided on the first antenna board 20.

In the embodiment of FIG. 9, two pieces of the first antenna parts 21(21a, 21b) are provided as a cross-dipole antenna having a substantially V shape.

Two ends having a substantially V-shape of the first antenna part 21 (21a, 21b) are made to extend toward both ends of the short side of the first antenna board 20, respectively.

In the first antenna part 21 (21a, 21b), a central bent portion having a substantially V-shape is disposed in the vicinity of the center of the first antenna board 20, respectively.

Further, in the embodiment of FIG. 9, the first antenna part 21 (21a, 21b) is connected to the cable 22 in the vicinity of the center of the first antenna board 20.

The cable 22 is connected to the main board 10 at an end different from the end that is connected to the first antenna part 21 (21a, 21b).

The configuration of the first antenna part 21 provided on the first antenna board 20 is not limited to the above-mentioned configuration.

In another configuration, the first antenna part 21 includes the first antenna element 21a and the second antenna element 21b. The first antenna element 21a has a shape in common with that of the second antenna element 21b, but the first antenna element 21a further includes an additional path portion, and thus the first antenna element 21a outputs electromagnetic waves having a phase that differs from that of electromagnetic waves outputted from the second antenna element.

In yet another configuration, the first antenna board 20 includes a third antenna element as the first antenna part 21. The third antenna element extends along at least a part of a circumference of the housing surface.

The first antenna board 20 has a substantially rectangular shape, but in FIG. 9 (A), a recess part is provided in the vicinity of the center of the lower long side thereof.

This recess part is capable of providing a space for guiding, for example, the light guiding part 142 illustrated in FIG. 4 and the like, to the housing 400.

In the embodiment of FIG. 9, as illustrated in FIG. 9 (B), the input unit 15 is configured as a 4-pin connector of a male type, and the output unit 16 is configured as a 4-pin connector of a female type.

The above-mentioned four pins may be used for the power supply, the data line (positive side), the data line (negative side), and the ground.

As the male type 4-pin connector, for example, a male type 4-pin M12D may be used. In addition, as the female type 4-pin connector, for example, a female type 4-pin M12D may be used.

Besides, both of the input unit 15 and the output unit 16 may be the male type. Also, both of the input unit 15 and the output unit 16 may be the female type. Or, the above-mentioned configurations of the male type and the female type may be replaced with each other.

Furthermore, the input unit 15 and the output unit 16 may have yet another configuration different from the above-mentioned examples.

The input unit 15 may be configured to be supplied with power from a conventional general power grid, or from a next-generation power grid (or smart grid), a solar power grid (or solar grid), or a laser power grid.

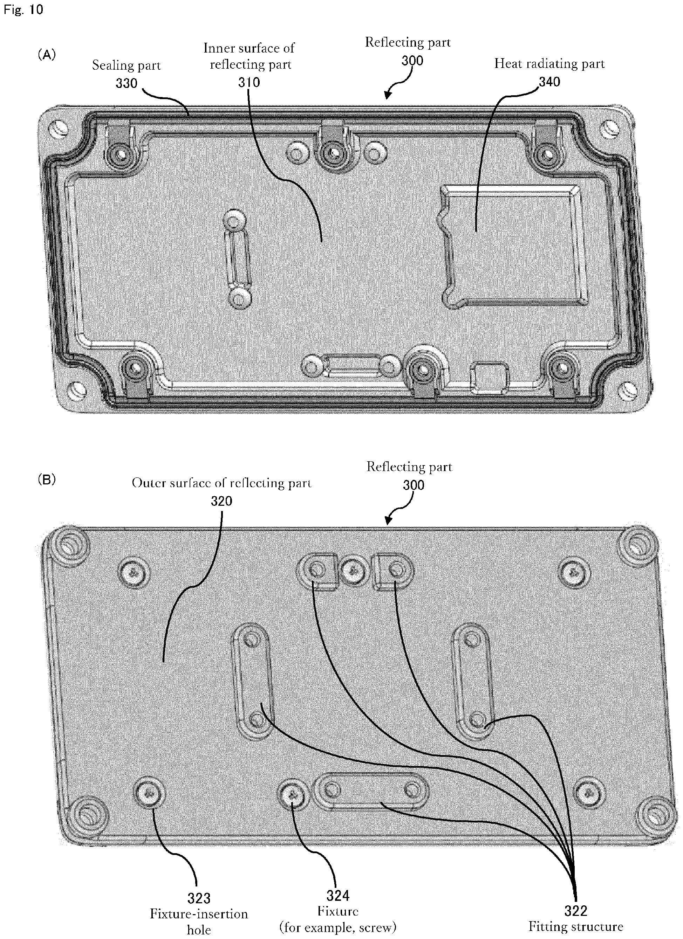

FIG. 10 depicts an example giving an explanation of the configuration of the reflecting part 300.

FIG. 10 (A) depicts an example giving an explanation of the inner surface 310 of the reflecting part 300.

FIG. 10 (B) depicts an example giving an explanation of the outer surface 320 of the reflecting part 300.

The reflecting part inner surface 310 of the reflecting part 300 illustrated in FIG. 10 (A) is a surface facing the housing 400 to be in contact with the housing 400.

The reflecting part 300 illustrated in FIG. 10 (A) is formed to have a recess part 311, for example, a groove or notch, around the reflecting part inner surface 310, so as to fit the sealing part 330 therein.

For example, the sealing part 330 to be fitted into the recess part is a packing or the like.

The sealing part 330 may preferably be made of an elastic material so as to liquid-tightly maintain the connection between the reflecting part 300 and the housing 400 due to the elastic deformation of the elastic material.

At least a part of the reflecting part 300 is formed as a heat radiating part (or heat receiving part) 340.

For example, the reflecting part inner surface 310 may preferably have a heat radiating part (or heat receiving part) 340.

The heat radiating part 340 may preferably be provided in a region that is thermally connected to the heat guiding part 18 attached to the main board 10.

Preferably, it is formed to be more convex than the other region of the reflecting part inner surface 310, and the heat radiating part 340 of the reflecting part 300 is formed as a convex part. The main board 10 is in contact with the heat radiating part 340 of the reflecting part 300 directly or indirectly via a heat conductive member (such as the heat guiding part 18).

The main board 10 may preferably have a heat generating part in a corresponding region opposite to a region being in contact with the heat radiating part 340 of the reflecting part 300.

For example, the heat generating part is an amplifier, a processing unit, or the like.

The reflecting part 300 may be made of a metal having the same composition by casting or die casting so as to be inexpensively manufactured.

However, for example, it may be made by a lamination method (or 3D printing or additive manufacturing) or the like such that the reflecting part 300 is made of various materials for each part thereof.

For example, the heat radiating part (or heat receiving part) 340 of the reflecting part 300 may be made of a metal having higher thermal conductivity, and the other parts of the reflecting part 300 may be made of a metal having higher reflectivity with regard to electromagnetic waves.

In yet another embodiment, the reflecting part 300 may be formed by combining a plurality of different individual metal parts.

The reflecting part 300 is configured to receive heat generated at the main board 10, at the heat radiating part (or heat receiving part) 340, through the heat guiding part 18, and to discharge heat toward the outside of the transmitter 1 from the reflecting part outer surface 320.

The heat radiating part 340 may preferably be formed to rapidly diffuse heat received by the heat radiating part 340 to the entire reflecting part 300 such that the heat radiation property or heat dissipation property of the entire transmitter 1 is improved.

In another embodiment, the heat radiating part (or heat receiving part) 340 may be in directly contact with the main board 10 without using a member such as the heat guiding part 18.

In yet another embodiment, the reflecting part 300 may have a plurality of heat radiating parts (or heat receiving parts) 340, and in such a configuration, the sizes and the shapes of the respective heat radiating parts may be different.

The reflecting part outer surface 320 of the reflecting part 300 illustrated in FIG. 10 (B) is a surface facing away from the housing 400.

In the reflecting part 300 illustrated in FIG. 10 (B), a plurality of fixture-insertion holes 323 are provided at respective positions of the reflecting part outer surface 320.

A fixture 324, such as a screw, is inserted into the fixture-insertion hole 323, and the fixture 324 is further inserted into a boss 410 provided in the housing 400 to fixedly connect the reflecting part 300 and the housing 400.

A fitting structure 322 is provided on the reflecting part outer surface 320.

The fitting structure 322 may be used as a connection with a fixture that is for mounting the transmitter 1 in its mounting position.

The fitting structure 322 may be configured such that an additional fixture (for example, a DIN rail fitting) may be secured using a screw or the like.

In addition, the fitting structure 322 may be configured to select the direction of the transmitter 1 and attach it. For example, the fitting structure 322 may be configured to attach the transmitter 1 in both directions of a horizontal direction and a vertical direction.

In yet another embodiment, the transmitter 1 may be configured to be able to adjust the direction and/or the inclination, rotate, or slide by use of the fitting structure 322 or the like.

In these configurations, it is possible to flexibly adjust the direction along which electromagnetic waves emitted from the transmitter 1 travel in a space, and thus flexibly adjust the region in which the transmitter 1 is enabled to perform wireless power supply in the space.

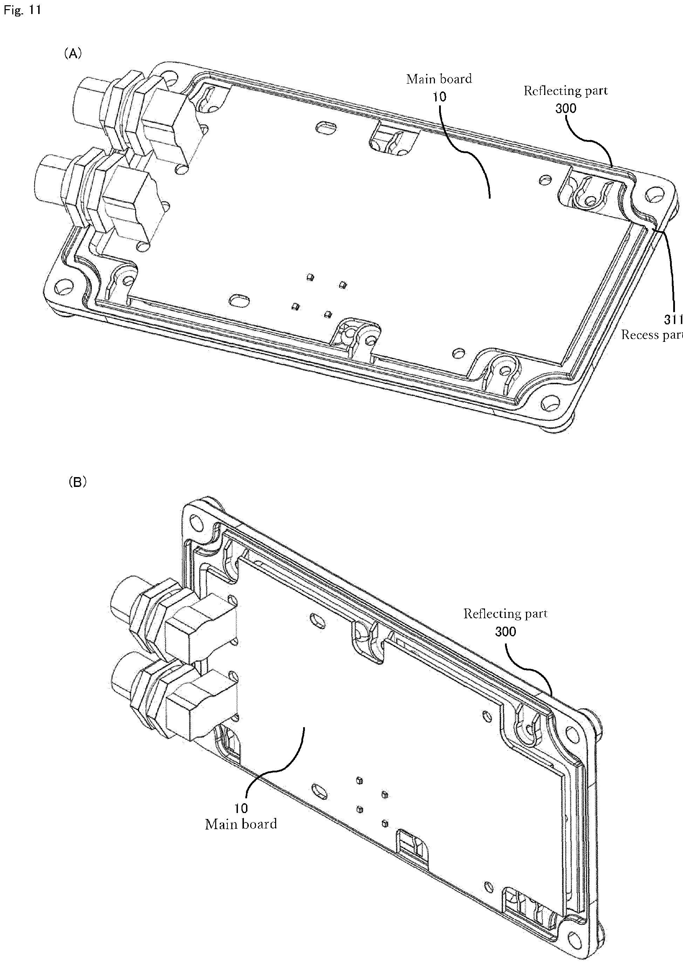

FIG. 11 depicts an example giving an explanation of the reflecting part 300 on which the main board 10 is stacked.

FIG. 11 (A) depicts a perspective view giving an explanation of the reflecting part 300 on which the main board 10 is stacked.

FIG. 11 (B) depicts another perspective view of the reflecting part 300 of FIG. 11 (A), viewed from a different angle.

The reflecting part 300 includes a recess part 311 formed to have a groove shape.

A sealing part 330 is fitted into the recess part 311.

The main board 10 is made to be slightly smaller than the substantially rectangular shape formed by the recess part 311.

The reflecting part 300 and the main board 10 are arranged substantially parallel to each other.

The distance between the reflecting part 300 and the main board 10 may preferably be designed to be relatively small, and in particular, in the region of the heat radiating part 340 of the reflecting part 300, two of them may be in direct contact or may be close to each other to the extent of indirect contact through a sheet-like member, grease, or the like.

### SECOND EMBODIMENT

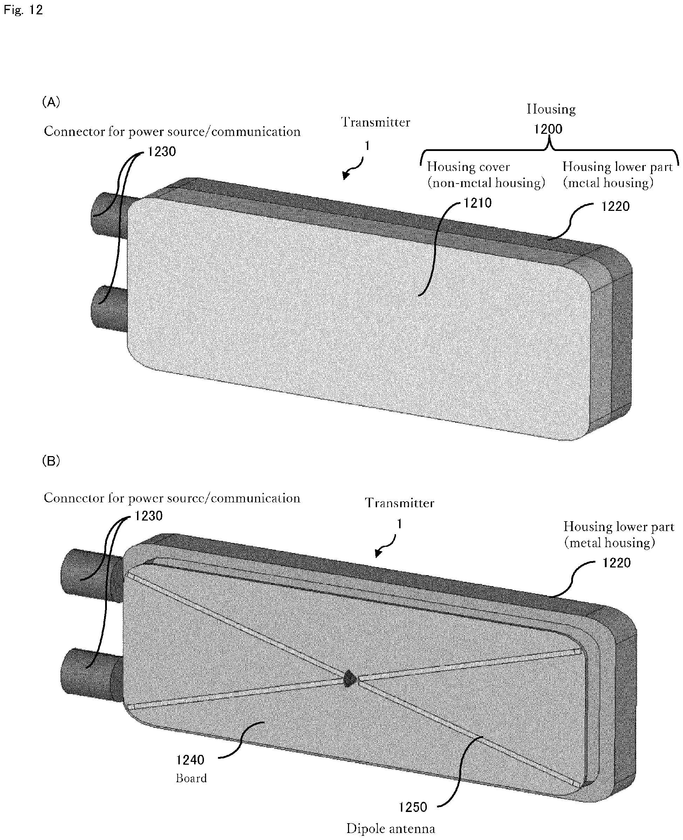

FIG. 12 depicts an example giving an explanation of the transmitter 1 according to the second embodiment

FIG. 12 (A) is a perspective view of the transmitter 1 according to the second embodiment.

FIG. 12 (B) is a perspective view of the transmitter 1 of FIG. 12 (A) in a condition in which a housing cover (non-metal housing) 1210 is removed.

In the following descriptions, the housing cover (hereinafter, also referred to as a non-metal housing) 1210 corresponds to the housing 400 of the transmitter 1 according to the first embodiment.

Also, in the following descriptions, the housing lower part (hereinafter, also referred to as a metal housing) 1220 corresponds to the reflecting part 300 of the transmitter 1 according to the first embodiment.

The descriptions of the reflecting part 300, the housing 400, and the like in the transmitter 1 according to the first embodiment are similarly applied to the following descriptions of the embodiment as long as there is no technical inconsistency.

Therefore, descriptions of the configurations and the like described above may be omitted.

The transmitter 1 according to the second embodiment illustrated in FIG. 12 includes a transmitter capable of generating RF signals (or Radio Frequency signals) included in the housing 1200, and an antenna capable of emitting RF signals, similar to the transmitter 1 according to the first embodiment.

The antenna is capable of being installed on a rear side (which is an inner surface facing the housing lower part 1220) of the housing cover (non-metal housing) 1210 of the housing 1200.

In addition, in the transmitter 1, the housing lower part (metal housing) 1220 of the housing 1200 may preferably be made of a metal body.

With such a configuration, the housing lower part 1220 may be configured to also function as a heat sink capable of dissipating heat that is generated from the amplifier and to reflect radio waves to improve the radiation gain.

As the core material of the housing 1200, for example, a lid is made of ABS resin or the like, and the antenna may preferably be formed of a thin (or flexible) FR4 (or Flame Retardant Type 4) or a low-loss board such as Megtron6 (R) or Rogers in order to reduce the loss of the board.

The housing lower part 1220 serving as the heat sink and the reflecting part may preferably be made of a metal such as aluminum. With such a configuration, it is possible to realize weight reduction, ease of processing, cost reduction, and the like of the housing lower part 1220.

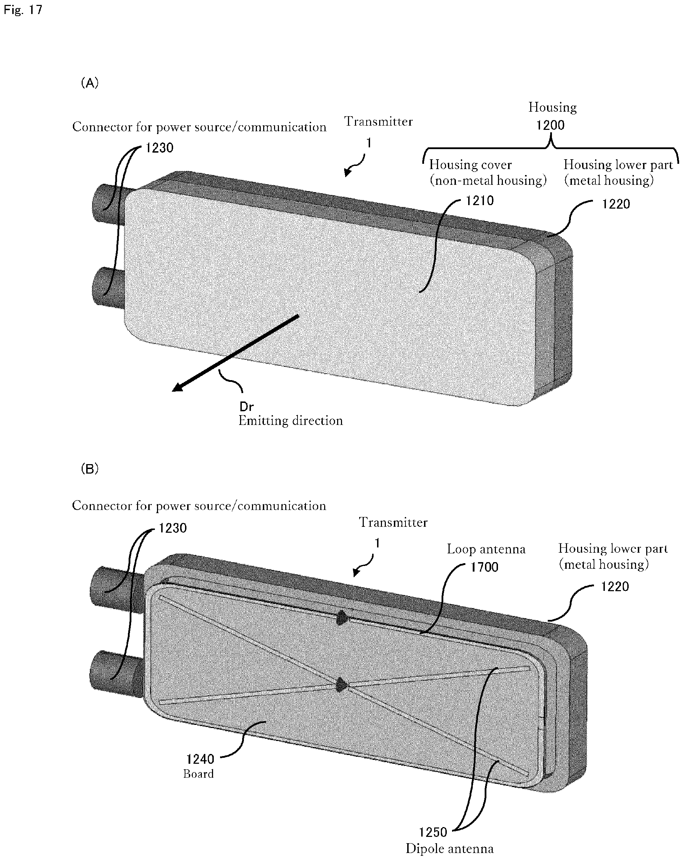

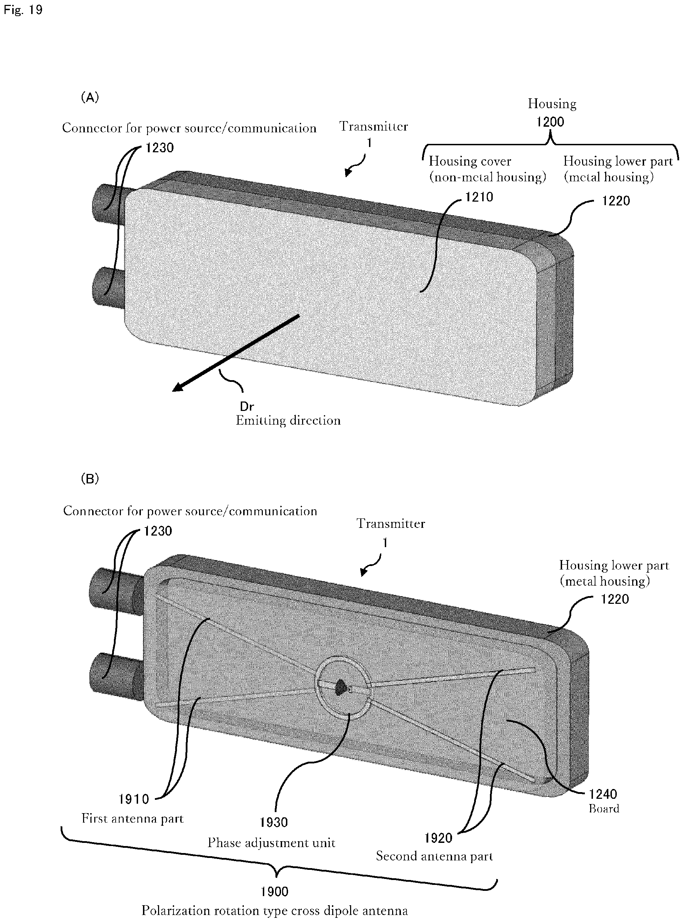

As the above-mentioned antenna, any one of a cross dipole antenna based on a dipole system, a loop system, a polarization rotation type antenna, a patch antenna and the like may be singly arranged or a plurality of them may be arranged in combination. A part of such embodiments is illustrated in FIGS. 17 and 19.

In particular, the antenna may preferably be arranged to maximize the opening surface of the antenna.

In addition to different types of antennas specifically described below with referring to FIGS. 12 to 23, various antennas may be used.

In another example, the antenna may be formed to have a shape extending in a straight line or extending in a zigzag shape, along the longitudinal direction of the housing lower part (metal housing) 1220, or to have a shape extending in a straight line or extending in a zigzag shape, along the transverse direction of the housing lower part (metal housing) 1220, each within a range that fits in the housing lower part (metal housing) 1220.

In yet another example, the antenna may have a shape extending obliquely along an arbitrary direction, a shape extending in a zigzag shape, a shape extending in a curved line, a shape extending in a meandering shape, a shape extending in a regular pattern, or a shape extending in an irregularly pattern, each within a range that fits in the housing lower part (metal housing) 1220.

In yet another example, the antenna may be formed as an arbitrary combination of various shapes of the antennas described herein, or the antenna may be formed to have any other shape.

The housing cover (non-metal housing) 1210 and the housing lower part (metal housing) 1220 are arranged substantially parallel to each other.

The transmitter 1 has a low-attitude configuration along the emitting direction (or radiation direction) Dr.

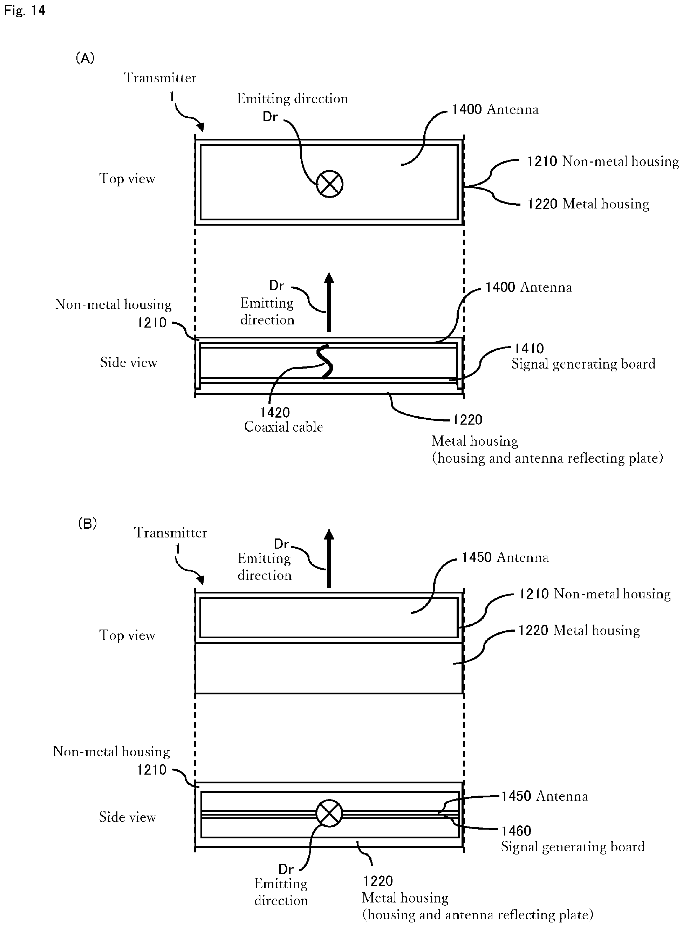

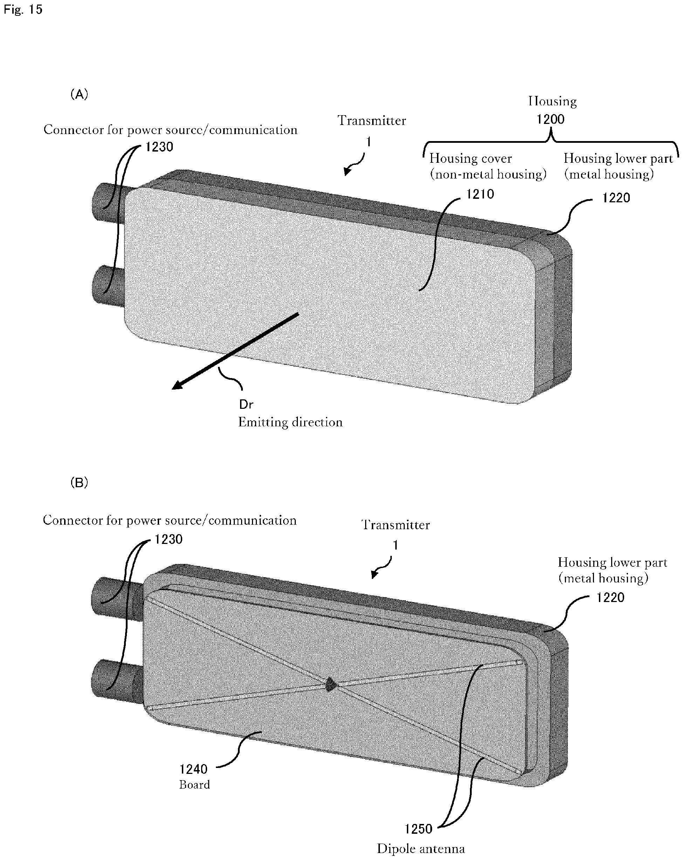

The transmitter 1 has a main emitting direction Dr (FIG. 14 and FIG. 15) of electromagnetic waves in a normal direction of mutually-parallel planes of the housing cover (non-metal housing) 1210 and the housing lower part (metal housing) 1220.

The transmitter 1 having such a configuration is capable of functioning as an antenna in which an electric field or a magnetic field becomes a main radiation, unlike a conventional patch antenna. The transmitter 1 having such a configuration is particularly excellent to be used for the purpose of performing wireless power supply and the like.

In addition, the transmitter 1 may be used even in a state where the housing lower part is attached to a metal surface of the installation position so that the performances of the transmitter 1 and the antenna are designed to be less susceptible to the characteristics such as the installation position and the physical characteristic of the installation part.

In the transmitter 1, power may preferably be supplied to the antennae using a UFL, a coaxial cable, or the like. In addition, the antenna may preferably be directly connected to the signal generating board. The antenna matching circuit may preferably be disposed on the signal generating board side.

The transmitter 1 may be provided with a dielectric between the antenna and the signal generating board.

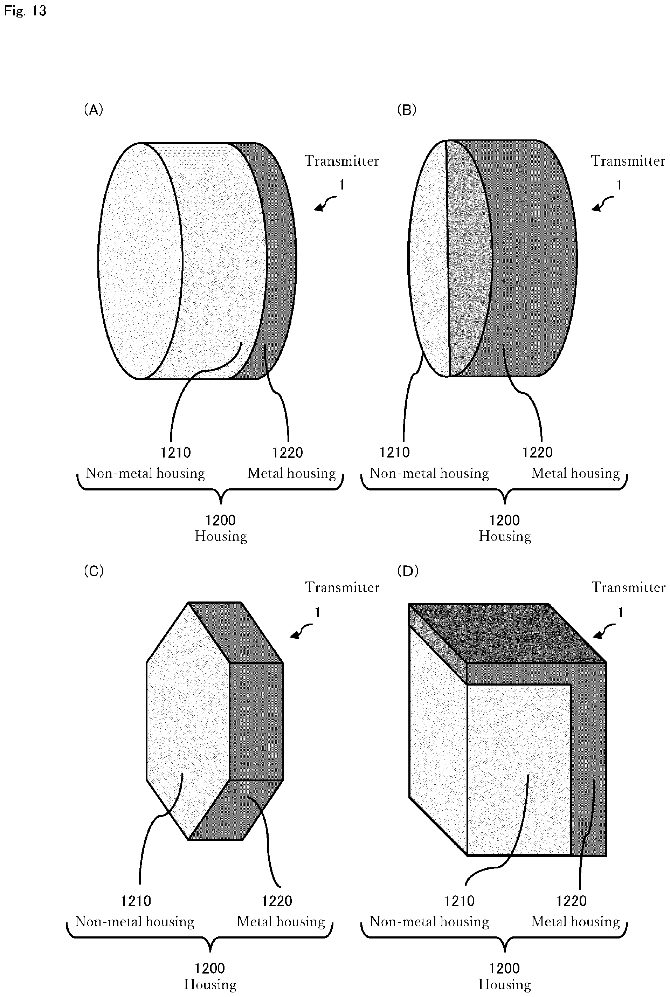

FIG. 13 depicts an example giving an explanation of a plurality of different configuration examples of the transmitter 1.

In the configuration example illustrated in FIG. 13 (A), the non-metal housing 1210 has a substantially cylindrical shape, and has a space in which a board, an antenna, and the like are accommodated.

In the configuration example illustrated in FIG. 13 (A), the metal housing 1220 has a substantially disk-like shape, and is configured to cover the non-metal housing 1210.

In the configuration example illustrated in FIG. 13 (B), the non-metal housing 1210 and the metal housing 1220 are configured to form a substantially cylindrical shape by combining them.

In addition, the non-metal housing 1210 and the metal housing 1220 are each formed in a hollow shape, and a common board, an antenna, and the like are accommodated in the hollow space.

FIG. 13 (B) illustrates a configuration in which the non-metal housing 1210 and the metal housing 1220 are configured such that the cylindrical body is divided into two halves, but the division ratio may be arbitrarily designed.

In the configuration example illustrated in FIG. 13 (C), the non-metal housing 1210 is formed to have a substantially hexagonal plate shape, and is configured to cover the metal housing 1220.

In the configuration example illustrated in FIG. 13 (C), the metal housing 1220 is formed to have a substantially hexagonal columnar plate shape, and has a space for accommodating a board, an antenna, and the like therein.

In the configuration example illustrated in FIG. 13 (D), the non-metal housing 1210 and the metal housing 1220 are configured to form a substantially rectangular parallelepiped shape by combining them.

In addition, a hollow part is present inside a substantially rectangular parallelepiped shape formed by the non-metal housing 1210 and the metal housing 1220 for accommodating a common board, an antenna, and the like in the hollow part.

In FIG. 13 (D), it is illustrated that the metal housing 1220 is formed to singly include at least two surfaces of a substantially rectangular parallelepiped shape. However, the number of surfaces singly formed by the non-metal housing 1210 or the metal housing 1220 may be arbitrarily designed. In addition, the ratio and the like of the non-metal housing 1210 and the metal housing 1220 in the surfaces formed by both the non-metal housing 1210 and the metal housing 1220 may be arbitrarily designed.

Even in the configuration examples of the different shapes described above, the present transmitter 1 is capable of having superior characteristics in comparison with the conventional art in that the appearances of the transmitter 1 may be designed relatively flexibly while maintaining its low attitude design and the high directivity of the antenna.

The shape of the present transmitter 1, in particular the shape of the housing 1200 of the transmitter 1, may be formed in any one of various shapes, such as a box shape, a spherical shape, a cylindrical shape, a columnar shape, a polygonal shape.

For example, it is possible to adapt not only the rectangular parallelepiped shape but also a configuration in which the antenna is wound around a cylinder, a prism, or the like, or a configuration in which the shape of the housing of the present transmitter has a circular or triangular cross-sectional shape.

Besides, as described above, the metal housing 1220 in the configuration examples of the different shapes may be configured as the reflecting part 300 in the first embodiment.

Therefore, the metal housing 1220 may have the individual configurations described above with respect to the reflecting part 300 of the first embodiment, to be singly arranged or arranged in combination.

FIG. 14 depicts an example giving an explanation of the emitting direction of electromagnetic waves.

FIG. 14 (A) illustrates the transmitter 1 in which the non-metal housing 1210 and the metal housing 1220 are disposed so as to overlap with each other when viewed in the emitting direction Dr of electromagnetic waves emitted from the antenna 1400 as in the cases of the first embodiment and the transmitter 1 according to FIG. 13 (A).

A mark illustrated as the emitting direction Dr in the top view of FIG. 14 (A) indicates that radio waves from the transmitter 1 are emitted in a direction perpendicular to the paper surface, directed to the front side of the paper surface.

Similarly, a mark illustrated as the emitting direction Dr in the side view of FIG. 14 (B) indicates that radio waves from the transmitter 1 are emitted in a direction perpendicular to the paper surface, directed to the front side of the paper surface.

In addition, the non-metal housing 1210 in the side view of FIG. 14 (B) is positioned closer to the front side of the paper surface as compared to the metal housing (housing and antenna reflecting plate) 1220 in the emitting direction Dr. In other words, the metal housing (housing and antenna reflecting plate) 1220 is positioned on the upstream side in the traveling direction of the emitting direction Dr, and the non-metal housing 1210 is positioned on the downstream side in the traveling direction of the emitting direction Dr.

FIG. 14 (B) illustrates the transmitter 1 in which the non-metal housing 1210 and the metal housing 1220 are arranged side by side when viewed in the emitting direction Dr of electromagnetic waves emitted from the antenna 1400, as in the case of the transmitter 1 according to FIG. 13 (B).

In the configuration example of FIG. 14 (A), the antenna 1400 is connected to the signal generating board 1410 via the coaxial cable 1420.

The electromagnetic waves emitted from the antenna 1400 pass directly through the non-metal housing 1210 and are emitted to the outside of the transmitter 1 toward the emitting direction Dr in the side view. In addition, the electromagnetic waves emitted from the antenna 1400 toward the metal housing 1220 are reflected by the metal housing 1220 functioning as a reflecting part, and are emitted toward the emitting direction Dr in the side view. Accordingly, when viewed in the side view, the electromagnetic waves directly emitted from the antenna 1400 toward the direction Dr and the electromagnetic waves reflected by the metal housing 1220 and emitted toward the direction Dr, overlap, pass through the non-metal housing 1210, and are emitted.

These overlapping electromagnetic waves are emitted in the emitting direction Dr, that is, when viewed in the top view, emitted toward the front side of the paper surface.

In the embodiment of FIG. 14 (B), the antenna 1450 is directly connected to the signal generating board 1460. For example, the antenna 1450 may be formed on the signal generating board 1460. However, it is possible to provide a hollow part between the antenna 1450 and the signal generating board 1460 and to connect them with a cable as illustrated in (A).

The electromagnetic waves emitted from the antenna 1400 pass directly through the non-metal housing 1210 and are emitted to the outside of the transmitter 1 toward the emitting direction Dr in the top view. In addition, the electromagnetic waves emitted from the antenna 1400 toward the metal housing 1220 are reflected by the metal housing 1220 functioning as a reflecting part, and are emitted toward the emitting direction Dr in the top view. Accordingly, when viewed in the top view, the electromagnetic waves directly emitted from the antenna 1400 toward the direction Dr and the electromagnetic waves reflected by the metal housing 1220 and emitted toward the direction Dr, overlap, pass through the non-metal housing 1210, and are emitted.

These overlapping electromagnetic waves are emitted in the emitting direction Dr, that is, when viewed in the side view, emitted toward the depth side (or back side) of the paper surface.

Besides, the metal housing 1220 according to the embodiment of FIG. 14 (B) is formed to have a hollow shape, and at least a part of the antenna 1450 and the signal generating board 1460 is accommodated in the hollow space.

FIG. 15 depicts an example giving an explanation of the emitting direction of electromagnetic waves in the transmitter 1 of FIG. 12.

FIG. 15 (A) is a perspective view illustrating the transmitter 1 according to the second embodiment depicted in FIG. 12 together with the emitting direction Dr thereof.

FIG. 15 (B) is a perspective view of the transmitter 1 of FIG. 12 (A) and FIG. 15 (A) in a condition in which the housing cover (non-metal housing) 1210 is removed.

In the transmitter 1 according to the second embodiment, the radiating direction Dr of the transmitter 1 is perpendicular to the outer surfaces of the non-metal housing 1210 and the metal housing 1220 which are substantially parallel to each other, and the radiating direction Dr of the transmitter 1 is a direction extending toward the non-metal housing 1210 from the metal housing 1220.

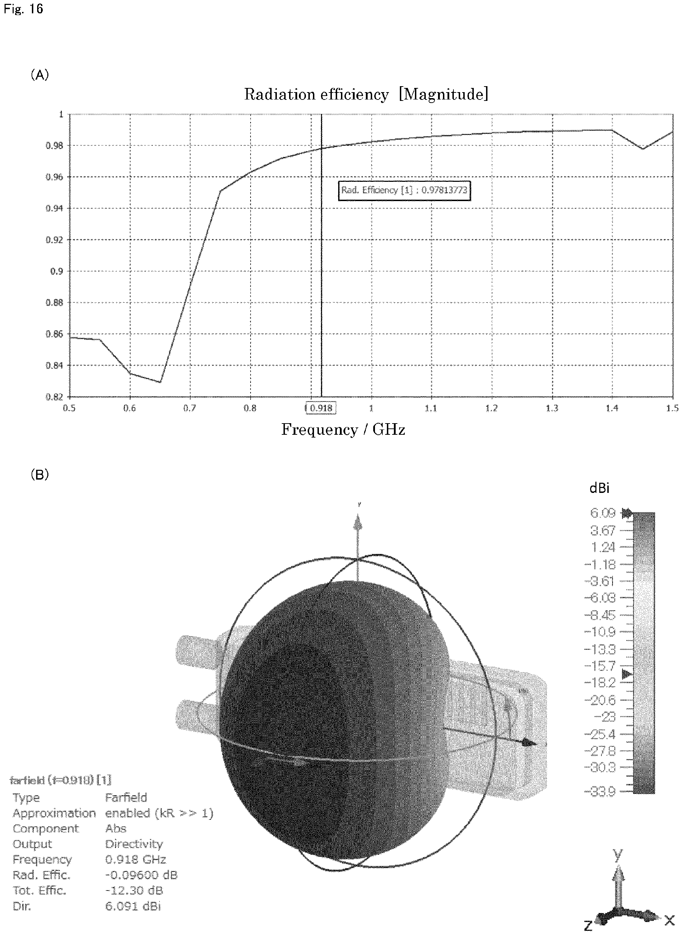

FIG. 16 depicts an example giving an explanation of the performances of the transmitter 1 according to the second embodiment illustrated in FIG. 12.

FIG. 16 depicts the results of a simulation performed by the applicant with regard to the transmitter 1, using a mathematical model on a computer.

FIG. 16 (A) depicts an example giving an explanation of the radiation efficiency of the transmitter 1 according to the second embodiment illustrated in FIG. 12.

FIG. 16 (B) depicts an example giving an explanation of the directivity (or absolute gain ratio) of the transmitter 1 according to the second embodiment illustrated in FIG. 12.

As can be seen from FIG. 16 (A), the transmitter 1 according to the second embodiment has a good radiation efficiency in 920 MHz band, and in particular, the antenna has a radiation efficiency of 97.8% at 918 MHz.

In addition, as can be seen from FIG. 16 (B), the transmitter 1 according to the second embodiment has a directivity of about 6.1 dBi at 918 MHz.

FIG. 17 depicts an example giving an explanation of another configuration of the transmitter 1.

FIG. 17 (A) is a perspective view of the transmitter 1 according to another configuration example.

FIG. 17 (B) is a perspective view of the transmitter 1 of FIG. 17 (A) in a condition in which the housing cover (non-metal housing) 1210 is removed.

The appearance of the transmitter 1 illustrated in FIG. 17 is similar to that of the transmitter 1 according to the configuration example illustrated in FIGS. 12 and 15.

The transmitter 1 according to the configuration example includes a dipole antenna 1250 similar to the configuration example of FIG. 15, and further includes a loop antenna 1700.

The loop antenna 1700 may preferably be disposed along an outer periphery of the board (or substrate) 1240.

The transmitter 1 according to this configuration example combines the dipole antenna 1250 and the loop antenna 1700 each having different radiation characteristics so that it is possible to perform transmission with higher efficiency.

For example, in the transmitter 1 according to this configuration example, it is possible to supply electric power of 500 mW to the dipole antenna 1250 and the loop antenna 1700, respectively.

In yet another embodiment, it is configured that the magnitude of the power supply to the dipole antenna 1250 and the loop antenna 1700 can be varied or adjusted.

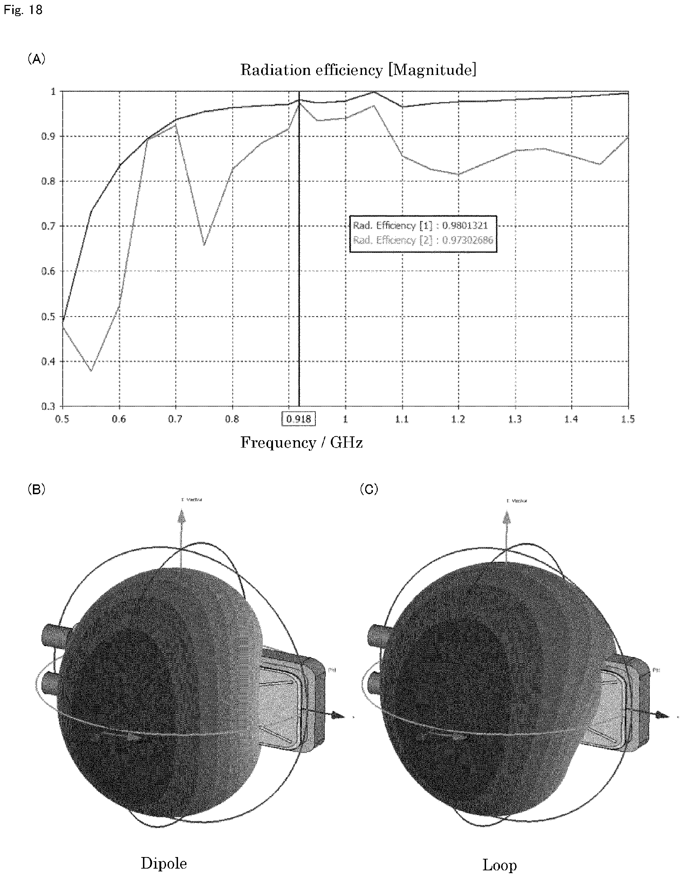

FIG. 18 depicts an example giving an explanation of the performances of the transmitter 1 illustrated in FIG. 17.

FIG. 18 depicts the results of a simulation performed by the applicant with regard to the transmitter 1, using a mathematical model on a computer.

FIG. 18 (A) depicts an example giving an explanation of the radiation efficiency of the transmitter 1 illustrated in FIG. 17.

FIG. 18 (B) and FIG. 18 (C) are examples respectively giving explanations of the directivity (or absolute gain ratio) of the dipole antenna 1250 and the loop antenna 1700 of the transmitter 1 illustrated in FIG. 17.

From FIG. 18 (A), it can be confirmed that the radiation efficiency of the dipole antenna 1250 at 918 MHz is about 98% (Efficiency [1] in FIG. 18 (A)), and the radiation efficiency of the loop antenna 1700 at 918 MHz is about 97% (Efficiency [2] in FIG. 18 (A)).

Therefore, from FIG. 18 (A), it can be confirmed that the reduction in radiation efficiency due to electromagnetic coupling that may be generated in a configuration in which two metal bodies are arranged in a narrow space is satisfactorily prevented.

From FIG. 18 (B) and FIG. 18 (C), it can be confirmed that each of the dipole antenna 1250 and the loop antenna 1700 has directivity in the direction extending from the metal housing 1220 toward the non-metal housing 1210, along the normal direction of the board 1240.

FIG. 19 depicts an example giving an explanation of another configuration example of the transmitter 1.

FIG. 19 (A) is a perspective view of the transmitter 1 according to the present configuration example.

FIG. 19 (B) is a perspective view of the transmitter 1 of FIG. 19 (A) in a condition in which the housing cover (non-metal housing) 1210 is removed.

The appearance of the transmitter 1 illustrated in FIG. 19 is similar to the case of the transmitter 1 and the like illustrated in FIGS. 12 and 15.

The transmitter 1 includes a dipole antenna similar to the dipole antenna 1250 in FIGS. 15 and 17.

Specifically, the transmitter 1 includes a V-shaped dipole antenna composed of a first antenna part 1910, and a dipole antenna composed of a second antenna part 1920 and of a phase adjustment unit 1930.

The transmitter 1 includes a polarization rotation type cross dipole antenna 1900 having a configuration in which the above-mentioned pair of dipole antennas are combined.

The transmitter 1 according to the present configuration example is capable of emitting rotatable polarized waves (or rotational polarization waves) as described later by using the polarization rotation type cross dipole antenna 1900.

The structures, particularly the lengths, of the first antenna part 1910 and of the second antenna part 1920 are similar to those of the dipole antenna 1250 in the configuration example of FIG. 15 and FIG. 17.

In particular, they are about a quarter (1/4) of a wavelength λ used in the transmitter 1.

In the transmitter 1 illustrated in FIG.19, the phase adjustment part 193 is connected to the second antenna part 1920, and the first length (or element length) composed of them is made to be longer than the length (or element length) of the dipole antenna composed of the first antenna part 1910.

The phase adjustment unit 1930 may preferably be disposed in a region near the center of the board 1240.

The phase adjustment unit 1930 may preferably have a configuration in which the phase of the dipole antenna composed of the second antenna part 1920 and of the phase adjustment unit 1930 is shifted with respect to the dipole antenna composed of the first antenna part 1910.

In the transmitter 1 illustrated in FIG. 19, the above-mentioned phase shift caused by the phase adjustment unit 1930 may preferably be, for example, about λ /4.

Based on the above-mentioned phase shift, the transmitter 1 illustrated in FIG. 19 is capable of emitting rotational polarization waves.

In a case where the transmitter 1 capable of emitting rotational polarization waves is used for performing wireless power supply to the electronic device 2, it is preferable that power transmission by wireless power supply may be satisfactorily performed by the phase-shifted polarization waves even for a plurality of electronic devices 2 having different orientations and positions with respect to the transmitter 1.

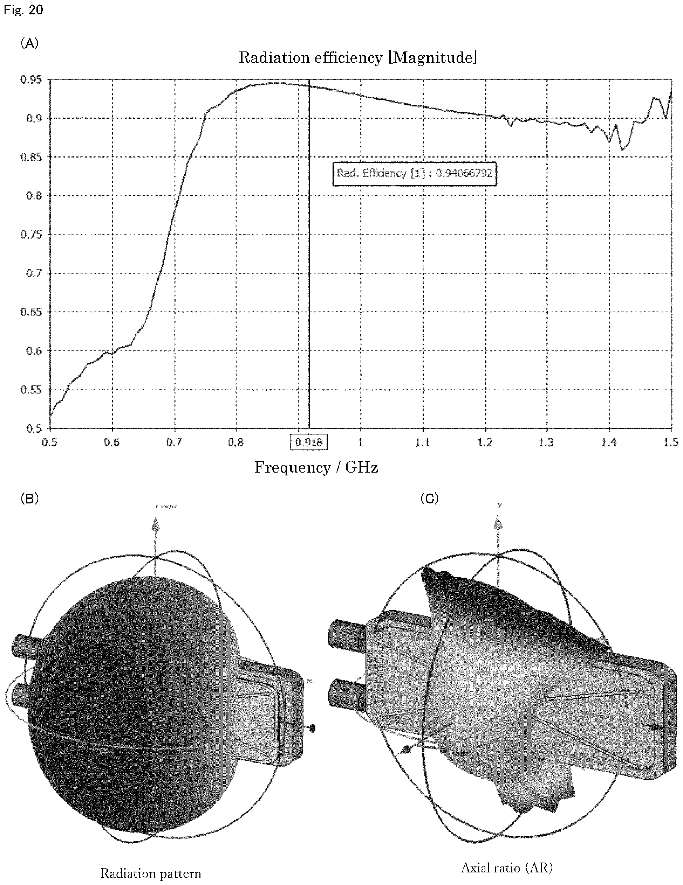

FIG. 20 depicts an example giving an explanation of the performances of the transmitter 1 illustrated in FIG. 19.

FIG. 20 depicts the results of a simulation performed by the applicant with regard to the transmitter 1, using a mathematical model on a computer.

FIG. 20 (A) depicts an example giving an explanation of the radiation efficiency of the transmitter 1 according to the present configuration example.

FIG. 20 (B) depicts an example giving an explanation of the directivity (or absolute gain ratio) of the transmitter 1 illustrated in FIG. 19.

FIG. 20 (C) depicts an example giving an explanation of the rotational property of the transmitter 1 illustrated in FIG. 19.

From FIG. 20 (A), it can be confirmed that the radiation efficiency of the polarization rotation type cross-dipole antenna 1900 is about 94% at 918 MHz (Efficiency [1] in FIG. 20 (A)).

From FIG. 20 (B), it can be confirmed that the polarization rotation type cross dipole antenna 1900 has a directivity along the direction extending from the metal housing 1220 to the non-metal housing 1210, in the normal direction of the board 1240.

It can be confirmed that, in FIG. 18 (C), the axial ratio (AR) of polarization waves emitted from the polarization rotation type cross-dipole antenna 1900 is low.

This means that an electric field is generated in both axes.

Accordingly, when used for performing wireless power supply, the transmitter 1 illustrated in FIG. 19 is configured so as to be easy to eliminate difficulty in receiving power due to a difference in the relative orientation relation between the transmitter 1 and the electronic device 2 that is configured as a power receiving device.

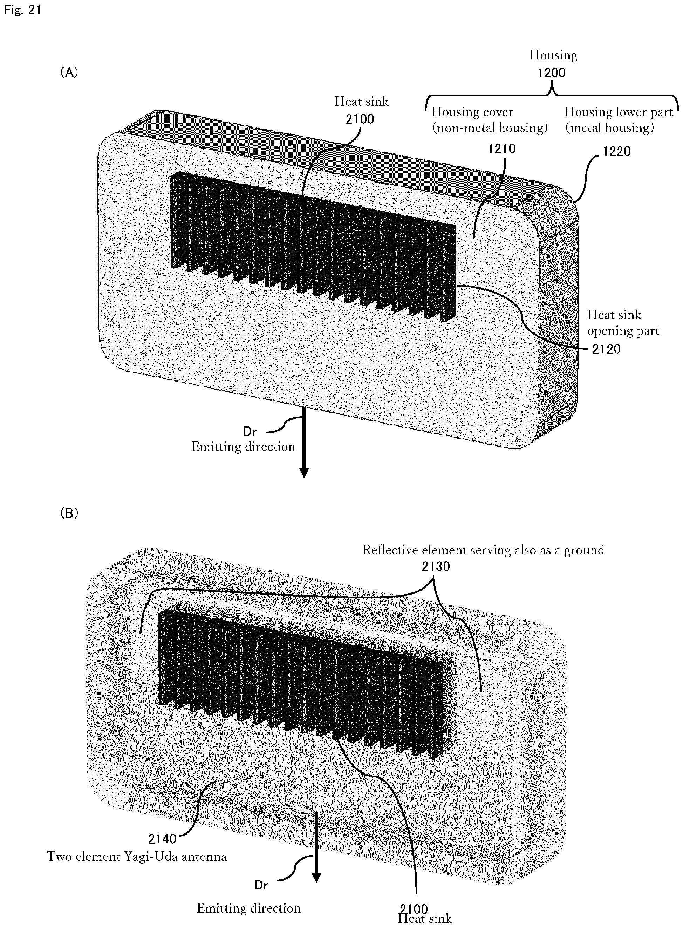

FIG. 21 depicts an example giving an explanation of another configuration of the transmitter 1.

FIG. 21 (A) is a cross-sectional view of the transmitter 1 according to the present configuration example.

FIG. 21 (B) is a perspective view of the transmitter 1 of FIG. 21 (A) in a condition in which the housing cover (non-metal housing) 1210 is removed.

The transmitter 1 illustrated in FIG. 21 includes a heat sink (here, the term "heat sink" is interchangeable with other similar variations such as "heat radiation plate" and "heat dissipation plate") 2100 that is thermally conductively attached to the reflective element 2130 serving also as a ground, in the housing 1200.

The housing cover (non-metal housing) 1210 includes a heat sink opening part 2120.

The heat sink 2100 may preferably be exposed to the outside of the housing 1200 from the heat sink opening part 2120, in particular, exposed to the outside of the housing 1200 so as to exchange heat with the outside air or the like around the transmitter 1.

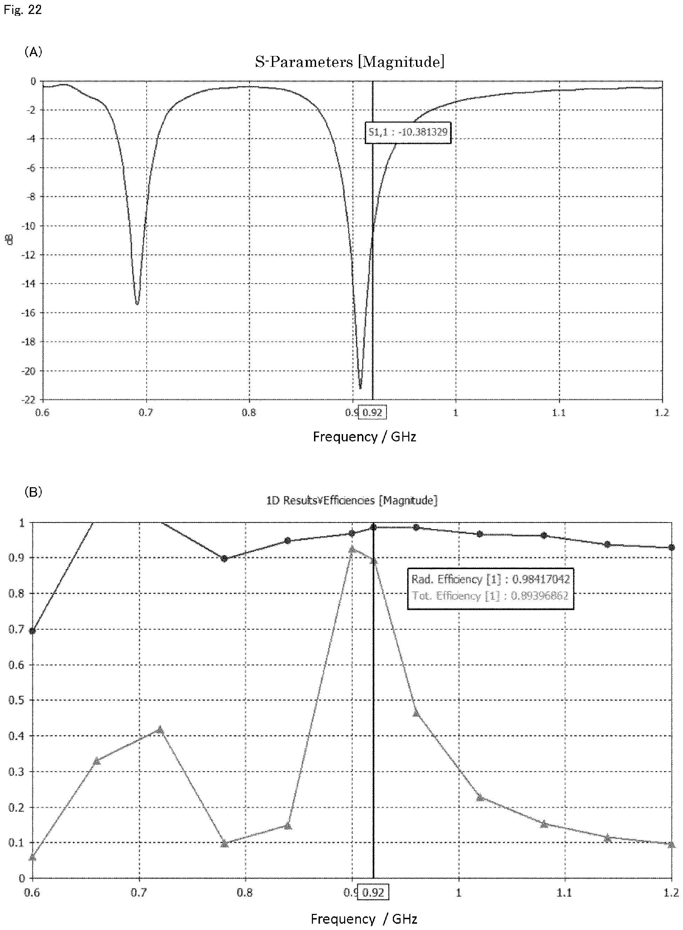

FIG. 22 depicts an example giving an explanation of the performances of the transmitter 1 illustrated in FIG. 21.

FIG. 22 (A) depicts an example giving an explanation of the S-parameter of the transmitter 1 illustrated in FIG. 21.

FIG. 22 (B) depicts an example giving an explanation of the radiation efficiency of the transmitter 1 illustrated in FIG. 21.

It can be confirmed that, in FIG. 22 (A), the transmitter 1 is functioning normally at 920 MHz.

In addition, it can be confirmed that, in FIG. 22 (B), the transmitter 1 has good radiation efficiency in 920 MHz band.

The radiation efficiency of the transmitter 1 according to the present configuration example is about 98% at 920 MHz, and the actual efficiency including the reflecting characteristic is about 90%.

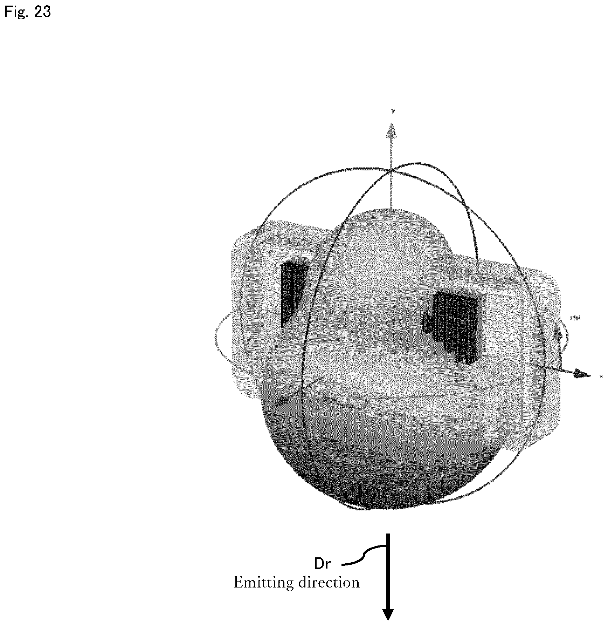

FIG. 23 depicts an example giving an explanation of the emitting direction of electromagnetic waves in the transmitter 1 illustrated in FIG. 21.

It can be confirmed that, in FIG. 23, the transmitter 1 is emitting electromagnetic waves toward the emitting direction Dr.

The electromagnetic waves emitted from a two element Yagi-Uda antenna 2140 are directly emitted to the emitting direction Dr, pass through the non-metal housing 1210, and are outputted to the outside of the transmitter 1. In addition, the electromagnetic waves are reflected by the heat sink 2100 and the reflective element which is serving also as a ground arranged side by side in the two element Yagi-Uda antenna 2140, pass through the non-metal housing 1210, and are outputted to the outside of the transmitter 1.

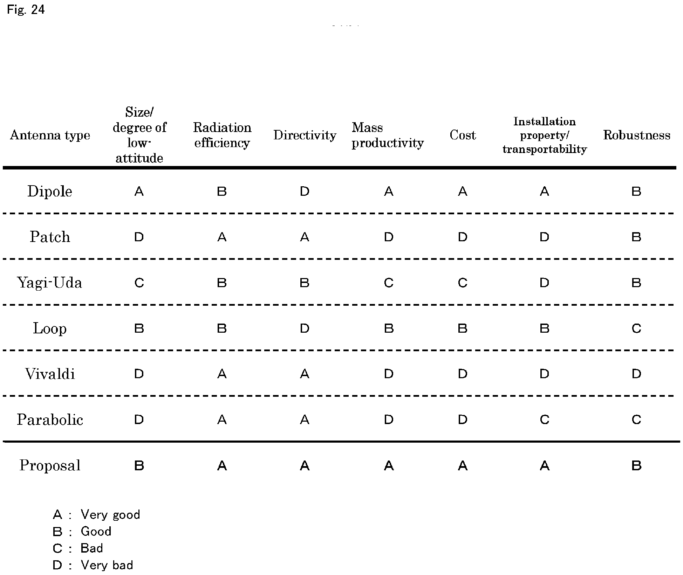

FIG. 24 depicts an example giving an explanation of the comparison when various antennas are used.

When a Dipole type antenna, a patch type antenna, a Yagi-Uda type antenna, a loop type antenna, a bivardi type antenna, a parabolic type antenna, and the like are used in the transmitter 1, each of these transmitters has its merits and demerits with regard to the size/degree of low attitude, the radiation efficiency, the directivity, the mass production, the cost, the installability/operability, and the robustness.

The present transmitter 1 has good or very good characteristics with respect to the size/degree of low attitude, the radiation efficiency, the directivity, the mass production, the cost, the installability/operability, and the robustness, as compared to the transmitters using the above-mentioned various antennas.

The present transmitter 1 which has excellent directional characteristics while maintaining a low-attitude is particularly preferable, for example, to be used as a power supply device when the wireless power supply is executed.

Besides, the communication band for performing power supply is not limited to 920 MHz band. For example, it may preferably be used in the UHF band, and it may be used in 868 MHz band in Europe, or it may be used in 915 MHz band in the United States. Further, it may be used in another frequency band belonging to the UHF band.

In addition, the communication band for performing data communication is not limited to 2.4 GHz band, and it may be used in a frequency band in the vicinity (or plus or minus 10%) of 2.4 GHz. For example, it may be used in a 2.45 GHz band. Also, it may be used in a communication band in the vicinity of 5.7 GHz. While a high frequency band is required for performing high-speed data communication, a lower frequency band may be used for performing power supply as compared with the case of performing data communication.

The control device may be, for example, a single-board computer equipped with a processor. The control device may be, for example, the Raspberry Pi or the like. The control device may also be realized by implementing the edge computing with use of the Python (R) or the like on the Raspberry Pi. In addition, the control device may be realized by use of a microcomputer, an ASIC (application specific integrated circuit), or a PLC (programmable logic controller).

The control device is not limited to the above-mentioned examples, and may be, for example, a portable terminal such as a smart phone, a tablet, a mobile phone, or a personal digital assistant (PDA); a wearable terminal such as a glasses-type wearable terminal, a wristwatch-type wearable terminal, or a clothing-type wearable terminal; a stationary type computer or a portable type computer such as a notebook-type personal computer, or a server disposed on a cloud or a network; or a combination of a plurality of these terminals. For example, a combination of one smartphone and one wearable terminal may logically function as one terminal. Other information processing terminals may be used.

A main storage device may be associated with the control device. Various programs, applications, and the like (modules) are stored in the main storage device, and when the processor executes any of these programs and applications, each functional element of the entire system is realized. Besides, the respective modules may be implemented by hardware, for example, by integrating the modules. Each module may be an independent program or application, but may be implemented as a part of a subprogram or function in a single integrated program or application.

The present invention is not limited to the above-mentioned embodiments, and includes various modifications. For example, the above-mentioned embodiments have been described in detail for the purpose of illustrating the present invention in a way that is easier to understand, and are not necessarily limited to those having all the described configurations. Further, it is possible to replace a part of the configuration of one embodiment with the configuration of another embodiment, and it is also possible to add the configuration of one embodiment to the configuration of another embodiment. Further, it is possible to add, delete, or replace a part of the configuration of one embodiment with respect to another configuration.

In addition, some or all of the above-mentioned configurations, functions, processing units, processing means, and the like may be realized by hardware, for example, by designing them with an integrated circuit. The above-mentioned configurations, functions, and the like may be realized by software in a way that the processor interprets and executes programs for realizing the respective functions. Information such as programs, tables, and files that realize the respective functions may be stored in a storage device such as a memory, a hard disk, or an SSD (Solid State Drive), or a storage medium such as an IC card, an SD card, or a DVD.

In addition, the control lines and the information lines considered to be necessary for explanations are illustrated, but not necessarily all the control lines and information lines for realizing the product are illustrated. In practice, it can be considered that almost all of the configurations are interconnected.

It should be noted that the above-mentioned embodiments disclose at least the configurations described in the claims.

### [Explanation of Reference numerals]

1... Transmitter, 2... Electronic device, 10... Main board, 20... First antenna board, 21 (21a, 21b)... First antenna part, 300... Reflecting part, and 400... Housing.

## Claims

1. A transmitter comprising:
a housing;
a main board arranged in the housing;
a first antenna board having a first antenna part, arranged in the housing; and
a reflecting part for reflecting electromagnetic waves outputted from the first antenna part.

2. The transmitter according to claim 1, wherein the reflecting part has a reflecting characteristic higher than that of the housing, with regard to electromagnetic waves, and
wherein the reflecting part reflects electromagnetic waves emitted from the first antenna part, toward the housing.

3. The transmitter according to claim 2, wherein electromagnetic waves emitted from the first antenna part, and electromagnetic waves emitted from the first antenna part and then reflected by the reflecting part overlap and travel in a direction from the first antenna part toward the housing.

4. The transmitter according to claim 3, wherein the housing accommodates and fixes the first antenna board and the main board, and
wherein the reflecting part closes an opening part of the housing accommodating the first antenna board and the main board.

5. The transmitter according to claim 4, wherein the hosing has a housing surface substantially parallel with the first antenna board having the first antenna part, and with the reflecting part,
wherein a distance from the first antenna board to the housing surface is smaller than a distance from the first antenna board to the reflecting part.

6. The transmitter according to claim 5, wherein the distance from the first antenna part to the reflecting part is in a range of from λ /16 to λ /4, and wherein the symbol λ represents a length of electromagnetic waves.

7. The transmitter according to claim 6, wherein at least a part of the first antenna board is in contact with the housing surface.

8. The transmitter according to any one of claims from 1 to 7, wherein the hosing has a housing surface substantially parallel with the first antenna board having the first antenna part, and with the reflecting part,
wherein the housing surface has a substantially rectangular shape,
wherein the first antenna board has, as the first antenna part, a first antenna element and a second antenna element, each of which has a substantially V shape, and
wherein ends of each of the first antenna element and the second antenna element face different apexes of the substantially rectangular shape of the housing surface.

9. The transmitter according to claim 8, wherein ends of each of the first antenna element and the second antenna element face apexes of different short sides of the substantially rectangular shape of the housing surface.

10. The transmitter according to claim 9, wherein the first antenna element has a shape in common with the second antenna element,
wherein the first antenna element further has an additional path portion, and
wherein the first antenna element outputs electromagnetic waves having a phase different from that of electromagnetic waves outputted from the second antenna element.

11. The transmitter according to claim 8, wherein the first antenna board includes a third antenna element as the first antenna part, and
wherein the third antenna element extends along at least a part of a circumference of the housing surface.

12. The transmitter according to any one of claims from 1 to 7, wherein at least a part of the reflecting part is formed as a heat radiating part.

13. The transmitter according to claim 12, wherein the heat radiating part of the reflecting part is formed as a convex part, and
wherein the main board is in contact with the heat radiating part of the reflecting part directly or indirectly via a heat conductive member.

14. The transmitter according to claim 13, wherein the main board has a heat generating part in a region opposite to a region being in contact with the heat radiating part.

15. The transmitter according to claim 14, wherein the heat generating part is an amplifier.

16. The transmitter according to any one of claims from 1 to 7, further comprising a second antenna board having a second antenna part,
wherein the second antenna board is disposed substantially perpendicularly to the first antenna board and the main board.

17. The transmitter according to claim 16, wherein the first antenna board is connected to the main board via a first cable,
wherein the first antenna board has a substantially rectangular shape, and
wherein the first cable is guided from a long side of the substantially rectangular shape to the first antenna board so that the first cable is connected to the first antenna part.
